(19) **Europäisches Patentamt / European Patent Office / Office européen des brevets**

(11) **EP 4 761 198 A1**

(12) **EUROPEAN PATENT APPLICATION**
published in accordance with Art. 153(4) EPC

(43) Date of publication:
**17.06.2026 Bulletin 2026/25**

(21) Application number: **23948003.1**

(22) Date of filing: **09.08.2023**

(51) International Patent Classification (IPC):
*H04L 27/34* (2006.01)

(52) Cooperative Patent Classification (CPC):
**H04L 27/34**

(86) International application number:
**PCT/CN2023/111992**

(87) International publication number:
**WO 2025/030427 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **ZHENG, Xufei**
**Dongguan, Guangdong 523860 (CN)**

(74) Representative: **Taor, Simon Edward William et al**
**Venner Shipley LLP**
**TIDE Bankside**
**8 Emerson Street**
**London SE1 9DU (GB)**

(54) **INFORMATION TRANSMISSION METHOD, AND FIRST DEVICE AND SECOND DEVICE**

(57) The present application relates to an information transmission method, and a first device, a second device, a chip, a computer-readable storage medium, a computer program product, a computer program and a communication system. The information transmission method comprises: a first device performing first processing on a first bit stream which carries first information, so as to obtain a first complex signals which carries the first information; and the first device sending the first complex signals to a second device. In the embodiments of the present application, conversion processing is performed on a bit stream which carries first information and a complex signal which is used for air interface transmission, such that a globally optimal conversion effect can be achieved, thereby improving the performance of a wireless communication system.

The first device performs first processing on the first bitstream carrying the first information to obtain the first complex signals carrying the first information — S410

The first device sends the first complex signals to the second device — S420

**FIG. 4**

**Description**

TECHNICAL FIELD

The present disclosure relates to the field of communications, and in particular, to an information transmission method, the first device, the second device, a chip, a computer-readable storage medium, a computer program product, a computer program, and a communication system.

BACKGROUND

The basic processes of wireless communication generally include transmission, propagation, reception of signals and other processes. The transmission of signals is essentially the process of converting the information to be transmitted (bitstream) into radio signals, while the reception of signals is the process opposite to the transmission of signal(s). It will be appreciated that the conversion process between the transmitted information and the radio signals will have an important impact on the wireless communication performance. Therefore, how to optimize the conversion process to improve the performance of wireless communication system is a problem worthy of attention.

SUMMARY

Embodiments of the present disclosure provide an information transmission method, the first device, the second device, a chip, a computer-readable storage medium, a computer program product, a computer program, and a communication system, which can improve the performance of a wireless communication system.

The embodiments of the present disclosure provide an information transmission method. The method includes the following operations.

The first device performs the first processing on the first bitstream carrying the first information, to obtain the first complex signals carrying the first information.

The first device sends the first complex signals to the second device.

The embodiments of the present disclosure provide an information transmission method. The method includes the following operations.

The second device receives the second complex signals from the first device for carrying the first information.

The second device performs the second processing on the second complex signals, to obtain the second bitstream carrying the first information and/or feature information related to the second bitstream.

The embodiments of the present disclosure provide the first device. The first device includes the first processing module and the first communication module.

The first processing module is configured to perform the first processing on the first bitstream carrying the first information, to obtain the first complex signals carrying the first information.

The first communication module is configured to send the first complex signals to the second device.

The embodiments of the present disclosure provide the second device. The second device includes the second communication module and the second processing module.

The second communication module is configured to receive the second complex signals for carrying first information from the first device.

The second processing module is configured to perform the second processing on the second complex signals to obtain the second bitstream carrying the first information and/or feature information related to the second bitstream.

The embodiments of the present disclosure provide the first device. The first device includes a transceiver, a processor, and a memory. The memory is configured to store a computer program, the transceiver is configured to communicate with other devices, and the processor is configured to invoke and run the computer program stored in the memory to cause the first device to perform the information transmission method described above.

The embodiments of the present disclosure provide the second device. The second device includes a transceiver, a processor, and a memory. The memory is configured to store a computer program, the transceiver is configured to communicate with other devices, and the processor is configured to invoke and run the computer program stored in the memory to cause the second device to perform the information transmission method described above.

The embodiments of the present disclosure provide a chip for implementing the information transmission method described above.

Specifically, the chip includes a processor. The chip is configured to invoke and run a computer program from a memory to cause a device on which the chip is mounted to perform the information transmission method described above.

The embodiments of the present disclosure provide a computer-readable storage medium for storing a computer program that causes the device to perform the information transmission method described above when the computer program is run by the device.

The embodiments of the present disclosure provide a computer program product including computer program instructions that cause a computer to execute the information transmission method described above.

The embodiments of the present disclosure provide a computer program that, when run on a computer, causes the computer to execute the information transmission method described above.

The embodiments of the present disclosure provide a communication system including the first device and the second device for performing the above methods.

In the embodiments of the present disclosure, the conversion process is performed on the bitstream carrying the first information and the complex signals that are enable to be used for air interface transmission, and compared with performing multiple modular processes between the bitstream and the complex signals, the global optimization of the conversion effect can be achieved, thereby improving the performance of the wireless communication system.

BRIEF DESCRIPTION OF THE DRAWINGS

FIG. 1 is a schematic diagram of a communication system according to an embodiment of the present disclosure.
FIG. 2 is a schematic diagram of physical layer downlink transmission flows.
FIG. 3 is a schematic diagram of adjusting a modulation manner and a precoding manner according to channel state information (CSI).
FIG. 4 is a schematic flowchart of an information transmission method according to an embodiment of the present disclosure.
FIG. 5 is a schematic flowchart of an information transmission method according to another embodiment of the present disclosure.
FIG. 6 is a schematic diagram of a wireless communication transceiver scheme in one application example.
FIG. 7 is a schematic diagram of joint modulation and precoding triggered by a base station in an application example.
FIG. 8 is a schematic diagram of joint modulation and precoding triggered by a terminal in an application example.
FIG. 9 is a schematic diagram of determining the joint modulation and precoding manner based on Modulation and Coding Scheme (MCS) information in an application example.
FIG. 10A is a schematic diagram of a terminal indicating a model identifier (ID) through Channel State Information (CSI) feedback in an application example.
FIG. 10B is a schematic diagram of a network device determining a model ID based on CSI in an application example.
FIG. 11 is a schematic diagram of complete process flows of a network device in an application example.
FIG. 12 is a schematic diagram of complete process flows of a terminal in an application example.
FIG. 13 is a schematic block diagram of the first device according to an embodiment of the present disclosure.
FIG. 14 is a schematic block diagram of the second device according to an embodiment of the present disclosure.
FIG. 15 is a schematic block diagram of a communication device according to an embodiment of the present disclosure.
FIG. 16 is a schematic block diagram of a chip according to an embodiment of the present disclosure.
FIG. 17 is a schematic block diagram of a communication system according to an embodiment of the present disclosure.

DETAILED DESCRIPTION

Hereinafter, the technical solutions in the embodiments of the present disclosure will be described with reference to the drawings in the embodiments of the present disclosure.

The technical solution of the embodiments of the present disclosure may be applied to various communication systems, such as a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U), Non-Terrestrial Networks (NTN) system, Universal Mobile Telecommunication System (UMTS), Wireless Local Area Networks (WLAN), Wireless Fidelity (WiFi), Fifth-Generation (5G) systems or other communication systems, etc.

Generally speaking, the conventional communication system supports a limited number of connections and is easy to implement, however, with the development of communication technology, the mobile communication system will support not only conventional communication, but also, for example, Device to Device (D2D) communication, Machine to Machine (M2M) communication, Machine Type Communication (MTC), Vehicle to Vehicle (V2V) communication, or Vehicle to everything (V2X) communication, and the like, and the embodiments of the present disclosure may also be applied to these communication systems.

In one embodiment, the communication system in the embodiments of the present disclosure may be applied to a Carrier Aggregation (CA) scenario, a Dual Connectivity (DC) scenario, or a Standalone (SA) network layout scenario.

In one embodiment, the communication system according to the embodiments of the present disclosure may be applied to an unlicensed spectrum, and the unlicensed spectrum may also be considered as a shared spectrum. Alternatively, the communication system in the embodiments of the present disclosure may also be applied to a licensed spectrum, and the licensed spectrum may also be regarded as a non-shared spectrum.

The embodiments of the present disclosure describe various embodiments in conjunction with a network device and a terminal device. The terminal device may also be referred to as User Equipment (UE), an access terminal, a subscriber unit, a subscriber station, a mobile station, a mobile station, a remote station, a remote terminal, a mobile device, a user terminal, a terminal, a wireless communication device, a user agent or a user device, and the like.

The terminal device may be a STAION (ST) in a WLAN, may be a cellular telephone, a cordless telephone, a Session Initiation Protocol (SIP) telephone, a Wireless Local Loop (WLL) station, a Personal Digital Assistant (PDA) device, a handheld device having wireless communication capabilities, a computing device or other processing device connected to a wireless modem, an in-vehicle device, a wearable device, a terminal device in a next generation communication system such as an NR network, or a terminal device in a future evolved Public Land Mobile Network (PLMN) network, or the like.

In the embodiments of the present disclosure, the terminal device may be deployed on land, including indoor or outdoor, handheld, wearable, or vehicle-mounted. It may also be deployed on the water (such as ships, etc.). It may also be deployed in the air (such as, on aircraft, balloons and satellites, etc.).

In the embodiments of the present disclosure, the terminal device may be a Mobile Phone, a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in the embodiments of the present disclosure, the terminal device may also be a wearable device. Wearable devices may also be called wearable smart devices, which are a general term for applying wearable technology to intelligently design daily wear and develop wearable devices, such as glasses, gloves, watches, clothing and shoes. A wearable device is a portable device that is worn directly on the body or integrated into the clothes or accessories of the user. Wearable devices are not only hardware devices, but also realize powerful functions through software support, data interaction and cloud interaction. Generalized wearable smart devices include full functions, large size, and may realize complete or partial functions without relying on smart phones, such as smart watches or smart glasses, and only focus on a certain type of application functions and need to be used in conjunction with other devices such as smart phones, such as various types of smart bracelets and smart jewelry for physical sign monitoring.

In the embodiments of the present disclosure, the network device may be a device for communicating with a mobile device, may be an Access Point (AP) in a WLAN, may be an evolutional Node B (eNB or eNodeB) in LTE, or a relay station or Access Point, or a vehicle-mounted device, a wearable device, a network device (gNB) in an NR network, a network device in a future evolved PLMN network, or a network device in an NTN network, or the like.

By way of example and not limitation, in embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Alternatively, the network device may be a base station provided on a land, a water area, or the like.

In the embodiments of the present disclosure, the network device may provide a service for a cell, and the terminal device communicates with the network device through a transmission resource (for example, frequency domain resource or spectrum resource) used by the cell. The cell may be a cell corresponding to the network device (for example, a base station). The cell may belong to either a macro base station or a base station corresponding to a Small cell. These small cells may include: urban cell (Metro cell), micro cell, Pico cell, Femto cell, etc. These small cells have the characteristics of small coverage and low transmission power, and are suitable for providing high-speed data transmission services.

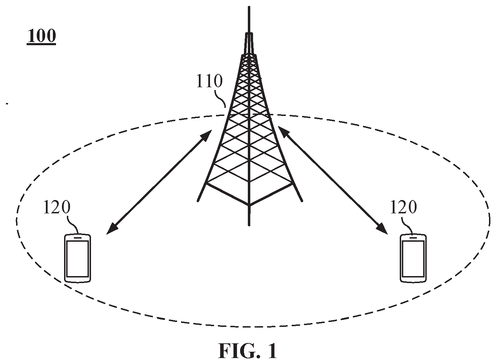

FIG. 1 exemplarily illustrates a communication system 100. The communication system includes a network device 110 and two terminal devices 120. In one embodiment, the communication system 100 may include multiple network devices 110, and the coverage range of each network device 110 may include another number of terminal devices 120, which is not limited in the embodiments of the present disclosure.

It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, which will not be described herein. The communication device may also include other devices in the communication system, such as other network entities such as a network controller and a mobility management entity, and which is not limited in the embodiments of the present disclosure.

It should be understood that the terms "system" and "network" are often used interchangeably herein. Herein, the term "and/or" is only used for describing an association relationship between association objects, and represents that there may be three relationships, for example, A and/or B, which may mean that A exists alone, A and B exist simultaneously, and B exists alone. In addition, the character "/" in the present disclosure generally represents that there is an "or" relationship between the association objects.

It should be understood that the "indication" mentioned in the embodiments of the present disclosure may be a direct indication, an indirect indication, or used for describing an association relationship. For example, A indicates B, which may mean that A indicates B directly, for example, B may be acquired by A. It may also mean that A indicates B indirectly, for example A indicates C, and B may be acquired through C. It may also be indicated that there is an association relationship between A and B.

In the description of the embodiments of the present disclosure, the term "correspondence" may represent that there is a direct correspondence or indirect correspondence relationship between the two objects, may represent that there is an association relationship between the two objects, or may indicate a relationship between indicating and being instructed, configuring and being configured, or the like.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as options solutions, and all of them belong to the scope of protection of the embodiments of the present disclosure.

Specifically, in modern wireless communication systems (including LTE and NR cellular communication systems), the design of the transmitter and receiver of wireless signals adopts classic modular design ideas, that is, the transmitting and receiving processes of the signal are disassembled into several sub-processes, which are completed collaboratively by multiple modules. Specifically, in the physical layer definition of the LTE and NR, the information bits at the transmitter need to be subjected to channel coding, modulation, precoding, resource mapper and Orthogonal Frequency Division Multiplexing (OFDM) signal generation and other main processes, so as to finally realize the transmission of the wireless signal. Similar principles are true on the receiver side. The main processes such as channel estimation, signal detection, demodulation, and channel decoding are needed to recover bit information.

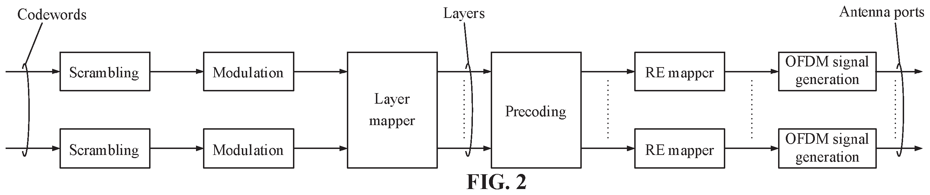

FIG. 2 is a schematic diagram of physical layer downlink transmission flows provided in the 3GPP standard. The codewords are signals generated after channel coding and rate matching are performed on the Transport Block (TB), and their form still belongs to bitstream (data stream in bit form, which may also be called bitmap, etc.). Thereafter, the codewords are subjected to scrambling, modulation, layer mapper, precoding, Resource Element (RE) mapper, OFDM symbol generation, and are finally transmitted through antenna(s). There is inverse processes of these processes at the receiving end, that is, the received signal is successively subjected to OFDM demapping, channel estimation, signal detection, RE resource demapping, layer demapping, demodulation, descrambling, channel decoding and other processes, and is finally restored to information bits.

For physical layer design, modulation and precoding of the signal (and the corresponding detection and demodulation at the receiving end) are two crucial modules. Modulation refers to converting a data stream in the form of bits into complex signals, while precoding determines how to use multiple Multiple-Input Multiple-Output (MIMO) antennas to send the modulated signal. The two processes are combined to actually determine how to map the information in the form of bits into complex signals that are enable to be sent through multiple antennas. It may be said that this is the core that determines the performance of wireless communication.

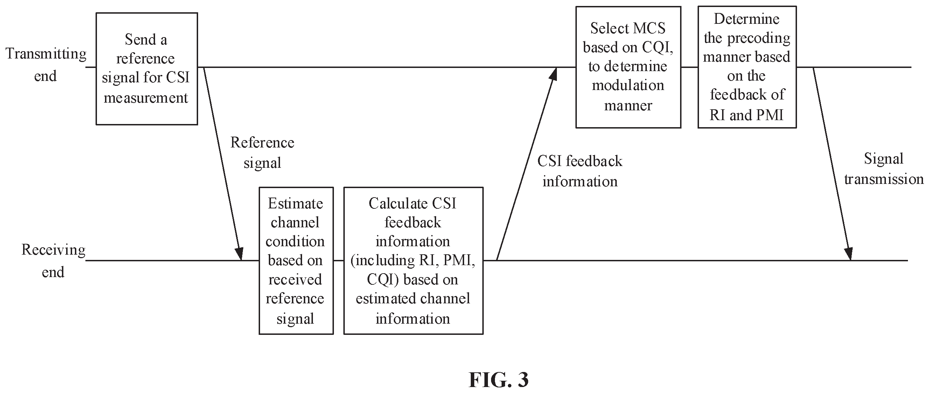

In order to adapt to different channel conditions and MIMO configurations, various modulation manners and precoding manners are defined. During the operation of the wireless system, the modulation manner and precoding manner may be adaptively adjusted according to the change of the channel. FIG. 3 is a schematic diagram of adjusting the modulation manner and the precoding manner according to CSI. As illustrated in FIG. 3, the modulation manner and precoding manner of the signal are respectively indicated by different parts in the CSI feedback. Specifically, in CSI feedback, Rank indicator (RI) and Precoding matrix indicator (PMI) determine the number of precoding streams and the final precoding matrix, while Channel quality indicator (CQI) determines Modulation and Coding Scheme (MCS) and then determines the modulation order for a single stream/layer.

The modulation and precoding for the signal actually determines how the digital signal is mapped into electromagnetic signals that are enable to be sent by MIMO system (in the system, the electromagnetic signal is represented in complex form), and the design of this mapping determines the final performance of the wireless digital communication system to a large extent. From the perspective of realizability, in the wireless communication systems including LTE and NR, the signal modulation and precoding parts are designed and optimized according to the classic modular division. Although these designs can achieve considerable performance from the perspective of a single module, their combination is still far from close to the global optimum.

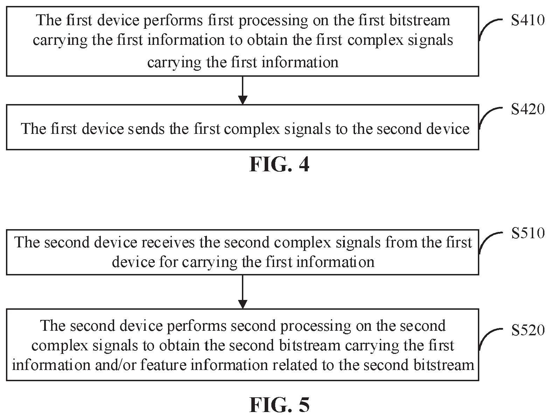

The technical solutions of the embodiments of the present disclosure are mainly to solve the technical problem described above. FIG. 4 is a schematic flowchart of an information transmission method according to an embodiment of the present disclosure. This method may optionally be applied to the system illustrated in FIG. 1, but which is not limited thereto. The method includes at least part of the following contents.

In operation S410, the first device performs the first processing on the first bitstream carrying the first information, to obtain the first complex signals carrying the first information.

In operation S420, the first device sends the first complex signals to the second device.

Exemplarily, the first device may be a network device or a terminal. Similarly, the second device may be a network device or a terminal device. In order to facilitate understanding, in the following description, the first device may also be referred to as a transmitting end, and the second device may also be referred to as a receiving end.

Exemplarily, the application scenario of the embodiments of the present disclosure may be one of the following scenarios.

In scenario 1, the first device is a terminal device, and the second device is a network device.

In scenario 2, the first device is a network device, and the second device is a terminal device.

In scenario 3, the first device is the first terminal device, and the second device is the second terminal device.

In scenario 4, the first device is the first network device, and the second device is the second network device.

Exemplarily, the first information may include any information to be transmitted, such as service data, measurement data, scheduling information, and the like, which is not limited in the embodiments of the present disclosure.

In the embodiments of the present disclosure, the bitstream is a data stream in the form of bits, and may also be referred to as a bitmap, or the like. Accordingly, the first bitstream may be a data stream encoded in the form of bits of the first information.

In the embodiments of the present disclosure, the complex signals are electromagnetic signals expressed in a complex form. Accordingly, the first complex signals may be electromagnetic signals in a complex form corresponding to the first information. In the embodiments of the present disclosure, sending the first complex signals to the second device includes processing the first complex signals and sending the signals on the antenna ports. Alternatively, the first complex signals are complex signals that are enable to be mapped to different logical antenna ports, and the second complex signals that are enable to be mapped to different physical antenna ports for sending may be obtained by processing the first complex signals.

In the embodiments of the present disclosure, the first processing is used to convert the bitstream into complex signals that are enable to be mapped to antenna ports. As described above, in the related art, a bitstream is converted into complex signals by modulation, and the signals are converted into complex signals that are enable to be mapped to different antenna ports by precoding (which may also include layer mapper, generally speaking, layer mapper is the preparation work for precoding, and therefore may be regarded as the preprocessing of precoding), whereas in the embodiments of the present disclosure, the bitstream is converted into complex signals that are enable to be mapped to different antenna ports by first processing, that is, step-by-step processing by multiple modules is not required.

Alternatively, the first processing may be an integrated process, or the first processing may be an end-to-end process from a bitstream to complex signals that are enable to be mapped to different antenna ports. Exemplarily, the first processing may be implemented based on a single module or a single model, the input information of the single module or the single model includes the first bitstream and the output information includes the first complex signals, and when optimizing the single module or the single model, the conversion effect between the first bitstream and the first complex signals is taken as an optimization target, and optimization of other information generated in the intermediate processing process does not need to be considered.

According to the above method, the conversion process is performed on the bitstream carrying the first information and the complex signals that are enable to be used for air interface transmission, and compared with performing multiple modular processes between the bitstream and the complex signals, the global optimization of the conversion effect can be achieved, thereby improving the performance of the wireless communication system, for example, improving the information transmission rate, reducing the bit error rate/false alarm rate, improving the spectrum efficiency, and the like. Specifically, although the designs in related technologies can achieve considerable performance from the perspective of a single module, their combination is still far from close to the global optimum, and in the above method, the boundaries of modules are broken, and combined design and optimization are performed, which can significantly improve the upper performance limitation of the communication system.

In some embodiments, the first bitstream is obtained by performing channel coding and scrambling on the first information, and the first complex signals are mapped to multiple second complex signals corresponding to different antenna ports when the first complex signals are sent. Exemplarily, the first bitstream may be codewords obtained by channel coding and scrambling for Transport Blocks (TB) of the first information. The first complex signals may be mapped to obtain multiple second complex signals sent on different physical antenna ports. That is, the first processing is process between channel coding and physical antenna port mapping (or complex signal mapping), that is, the first processing may replace the modulation, layer mapper, and precoding process.

Alternatively, the second complex signals may be obtained by performing RE mapper and a preprocessing procedure related to the waveform on the first complex signals. The preprocessing procedure related to the waveform is, for example, OFDM symbol generation, Discrete Fourier Transform-Spread OFDM (DFT-S-OFDM) symbol generation, and the like.

In some embodiments, the first processing is performed by a pre-configured model. Specifically, the first processing is performed by the pre-configured first sending processing model, input information of the first sending processing model includes the first bitstream, and output information of the first sending processing model includes the first complex signals. Exemplarily, the first sending processing model is an end-to-end processing model or an integrated processing model from the first bitstream to the first complex signals.

Alternatively, the first sending processing model may be a related classical theoretical model designed based on signal processing theory, or may be a processing model based on Artificial Intelligence (AI). Clearing the processing boundaries of multiple modules and performing integrated design and optimization has high design complexity. Using an AI model can reduce design complexity and have high processing accuracy.

Exemplarily, the first sending processing model may be a Machine Learning (ML) model. Alternatively, multiple bitstreams and complex signals obtained by modulating and precoding for each of the multiple bitstreams may be used to perform model training to obtain the first sending processing model.

In some embodiments, the first sending processing model is used to perform the first processing on the first bitstream based on related information of the CSI sent by the second device and/or a reference signal used for channel estimation by the second device.

Exemplarily, the input information of the first sending processing model may include the first bitstream and the related information of the CSI, so that the first sending processing model performs the first processing on the first bitstream based on the related information of the CSI. The related information of the CSI may be the CSI itself or information obtained after processing based on the CSI, for example, information obtained by inference or post-processing based on the CSI. The CSI may include one or more types of information such as RI, PMI, CQI, or the like. In this way, by converting the first bitstream in combination with the related information of the CSI, the model processing mode may be adaptively adjusted according to the change of the channel, thus the transmission performance can be improved.

Exemplarily, the input information of the first sending processing model may include the first bitstream, related information of the CSI, and a reference signal for performing channel estimation, such as a Channel State Information-Reference Signal (CSI-RS), a Demodulation Reference Signal (DMRS), or the like, so that the first sending processing model performs the first processing on the first bitstream based on the related information of the CSI and the reference signal. In this way, by inputting the reference signal together with the related information of the CSI into the model, and converting the first bitstream in combination with the channel estimation process, the transmission performance can be further improved.

It should be noted that the input information of the first sending processing model may include only the first bitstream, or may include the first bitstream, a reference signal, and the like. In practical applications, information may be combined according to different scenarios or needs, and the combination methods will not be listed here.

The information transmission method in the respective embodiments described above mainly relates to processing procedures of a sending end. It may be understood that the transmission performance may also be improved at the receiving end by adopting processing procedures matching the above method. FIG. 5 is a schematic flowchart of an information transmission method according to another embodiment of the present disclosure. This method is optionally applied to the system illustrated in FIG. 1, but is not limited thereto. The method includes at least part of the following contents.

In operation S510, the second device receives second complex signals from the first device for carrying the first information.

In operation S520, the second device performs the second processing on the second complex signals, to obtain the second bitstream carrying the first information and/or feature information related to the second bitstream.

Exemplarily, the second complex signals may be signals received on physical antenna interfaces of the second device.

Exemplarily, the second device performing the second processing on the second complex signals may include the second device performing the second processing on the second complex signals, or the second device performing the second processing after demapping the second complex signals into the third complex signals. Specifically, if the second complex signals are obtained by mapping the first complex signals to different physical antenna ports, the second processing may be performed on the third complex signals obtained by performing demapping on the second complex signals. The third complex signals are complex signals corresponding to the logical antennas. Exemplarily, the third complex signals may be obtained by OFDM demapping or DFT-S-OFDM demapping of the second complex signals.

In the embodiments of the present disclosure, the second processing is used to convert complex signals that are enable to be mapped to antenna ports (physical antenna ports or logical antenna ports) into a bit stream and/or feature information related to the bitstream.

Alternatively, the second processing may be an inverse process of the first processing in the above embodiments, or may be configured by adjusting based on the inverse process of the first processing. Since the second processing matches the first processing, the accuracy of the information recovered by the receiving end (i.e., the second device) can be improved.

Alternatively, the second processing may be used to recover the bitstream, and may be used to recover information corresponding to the bitstream. Exemplarily, the second processing may be used to obtain the second bitstream or feature information of the second bitstream. The feature information of the second bitstream is used to represent the second bitstream. For example, the feature information may be soft decision information, for representing the second bitstream, obtained based on the second processing. The soft decision information is, for example, a maximum Log-Likelihood Ratio (LLR), that is, the second device may not recover the signal in the form of a bitstream, but only needs to recover the maximum LLR representing the bitstream to determine the first information.

In some embodiments, the second processing may be an integrated process, or the second processing may be an end-to-end process from the complex signals to the second bitstream and/or feature information related to the second bitstream. Exemplarily, the second processing may be implemented based on a single module or a single model, the input information of the single module or the single model includes complex signals, and the output information includes the second bitstream and/or feature information of the second bitstream, and when optimizing the single module or the single model, the conversion effect between the input complex signals and the output second bitstream and/or feature information of the second bit stream is taken as an optimization target, and optimization of other information generated in the intermediate processing does not need to be considered.

In some embodiments, the information transmission method further includes: the second device performs channel decoding and descrambling on the second bitstream and/or the feature information related to the second bitstream to obtain the first information. In connection with the foregoing, since the second bitstream and/or the feature information related to the second bitstream is obtained by performing the second processing on the complex signals, the second processing is a process between demapping of the complex signals and channel decoding, that is, the second processing may replace the signal detection and demodulation processes.

In some embodiments, the second processing is performed by a pre-configured model. Specifically, the second processing is performed by a pre-configured first reception processing model. Input information of the first reception processing model includes the second complex signals and/or third complex signals obtained by performing demapping on the second complex signals, and output information of the first reception processing model includes the second bitstream for the first information and/or the feature information related to the second bitstream. Exemplarily, the first reception processing model is an end-to-end processing model or an integrated processing model from the complex signals to the second bitstream and/or the feature information of the second bitstream.

Alternatively, the first reception processing model may be a related classical theoretical model designed based on signal processing theory, or may be a processing model based on AI (Artificial Intelligence).

Exemplarily, the first reception processing model may be an ML model. Alternatively, multiple complex signals and a bit stream or related feature information obtained by performing signal detection and demodulation for each of the multiple complex signals may be used to perform model training to obtain the first reception processing model. Alternatively, the first reception processing model may be obtained by performing model training by using the complex signal output by the first sending processing model for each of the multiple bitstreams and the multiple bitstreams.

It may be understood that the first sending processing model is used to perform processing related to the first information to be transmitted at the information sending end (i.e., the first device). Since the processing for the signal by the sending end needs to be matched with the processing for the signal by the receiving end in order to successfully recover the first information at the receiving end, the first reception processing model corresponding to the first sending processing model is deployed at the receiving end, and the processing procedure of the first reception processing model is an inverse process of the processing procedure of the first sending processing model, thereby improving the accuracy of information transmission and improving the transmission performance.

In some embodiments, the first reception processing model is used to process the second complex signals and/or the third complex signals based on the channel information.

Exemplarily, the input information of the first reception processing model may include the second complex signals and channel information. The channel information may be information obtained by performing channel estimation on the reference signal, or may be information obtained by performing a certain kind of processing on the information obtained by channel estimation. The reference signal is, for example, a CSI-RS, a DMRS, or the like. In this way, by converting the second complex signals in combination with the channel information, the model processing manner can be adaptively adjusted according to the change of the channel, thus the transmission performance can be improved.

Exemplarily, the input information of the first reception processing model may include third complex signals and channel information. In this way, by converting the third complex signals in combination with the channel information, the model processing manner can be adaptively adjusted according to the change of the channel, thus the transmission performance can be improved.

It should be noted that the input information of the first reception processing model may include only the second complex signals, or the third complex signals, or the like. In practical applications, settings may be made according to different scenarios or demands, and the setting manners will not be listed here.

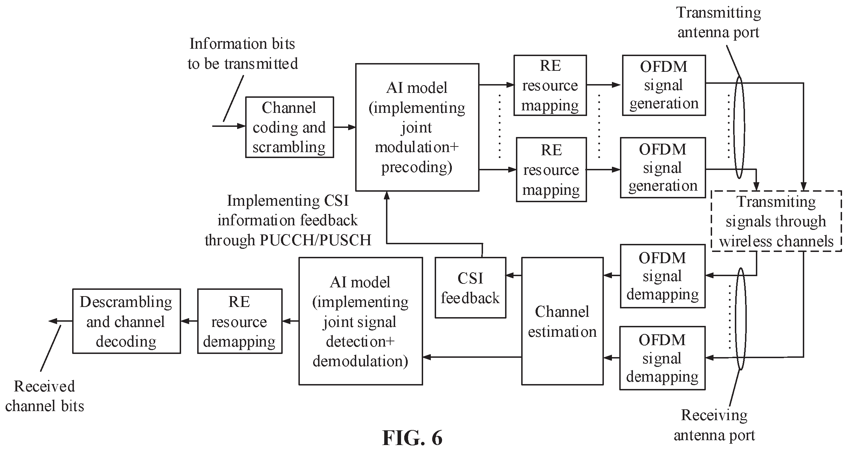

In order to facilitate understanding of the above-described technical solutions, FIG. 6 illustrates a schematic diagram of a wireless communication transceiver scheme according to an application example of the present disclosure. An information transmission method performed by a sending end and a receiving end, respectively, according to an embodiment of the present disclosure will be described below based on the wireless communication transceiver scheme.

As illustrated in FIG. 6, compared with the transmission flows in FIG. 2, in some embodiments of the present disclosure, improvements in the information transmission method may include the following.

At the transmitter end, an AI model is used to realize integrated signal modulation and precoding (that is, the above-mentioned first processing), which replaces the original modular modulation and precoding operations. That is, the AI model on the transmitter end replaces the modulation, layer mapper and precoding modules in the original framework in one fell swoop, and integrally maps the information bits after channel coding into complex signals that are enable to be sent on multiple antennas. It should be noted that in order to facilitate understanding, the first processing is described in the present disclosure as integrated signal modulation and precoding or joint modulation and precoding, but in practical application, the first processing does not include the signal modulation process and the precoding process in the conventional scheme.

At the receiver end, an AI model is used to realize joint signal detection and demodulation (that is, the above-mentioned second processing), which replaces the original modular signal detection and demodulation. Because the modulation and demodulation, layer mapping and layer demapping, and precoding and detection for the signal need to be matched, the transmitted information bits can be successfully recovered at the receiving end. Therefore, in the application example of the present disclosure, the form of a double-ended model is adopted, and an AI model matched with the sending end is adopted at the receiving end to integrally recover the input complex signals into information bits ready for channel decoding. Similarly, it should be noted that in order to facilitate understanding, the second processing is described in the present disclosure as joint signal detection and demodulation, but in practical application, the second processing does not include the signal detection process and the demodulation process in the conventional scheme.

In some scenarios, multiple implementation manners of the first processing may be configured in the first device, and accordingly, multiple implementation manners of the second processing may be configured in the second device For example, multiple sending processing models may be configured in the first device, and multiple reception processing models may be configured in the second device. The present disclosure provides some embodiments regarding how to determine the implementation manner(s) of the first processing/the second processing, and the embodiments in a scenario in which multiple implementation manners of the first processing/the second processing are configured will be described below.

In some embodiments, the first processing is implemented by the first sending processing model among multiple sending processing models in the first device. Accordingly, in some embodiments, the second processing is implemented by the first reception processing model among multiple reception processing models in the second device. The second device may indicate the Identifier (ID) of the first sending processing model and/or the ID of the first reception processing model when performing CSI feedback before information transmission. That is, before the transmission of the first information, the second device as the receiving end of the first information sends CSI feedback information to the first device as the sending end, and the CSI feedback information may include CSI (or information obtained by performing processing such as compression and coding on the CSI) and the model ID.

Specifically, before the second device receives the second complex signals for carrying the first information from the first device, the information transmission method further includes the following operation. The second device sends CSI feedback information to the first device. The CSI feedback information includes an ID of the first reception processing model for performing the second processing and/or an ID of the first sending processing model corresponding to the first reception processing model.

Accordingly, before the first device performs the first processing based on the first bitstream carrying the first information, the information transmission method further includes the following operation. The first device receives CSI feedback information from the second device. The CSI feedback information includes an ID of the first sending processing model for performing the first processing and/or an ID of the first reception processing model corresponding to the first sending processing model.

In an embodiment, when the second device performs CSI feedback, the second device carries the ID of the first reception processing model used by the second device, so that the first device performs the first processing by using the first sending processing model matched with the ID among the multiple sending processing models based on the ID. In another embodiment, the second device determines an ID of the corresponding first sending processing model according to the first reception processing model used by the second device, and carries the ID when performing CSI feedback, so that the first device performs the first processing by using the first sending processing model corresponding to the ID. In another embodiment, the second device may send the ID of the first reception processing model used by the second device and the ID of the corresponding first sending processing model to the first device in the CSI feedback information.

In some embodiments, the first device may determine the ID of the first sending processing model and/or the ID of the first reception processing model based on the CSI sent by the second device before information transmission, and indicate the ID of the first sending processing model and/or the ID of the first reception processing model to the second device.

Specifically, before the first device performs the first processing based on the first bitstream carrying the first information, the information transmission method further includes the following operations. The first device determines an ID of the first sending processing model for performing the first processing and/or an ID of the first reception processing model corresponding to the first sending processing model based on the CSI sent by the second device. The first device sends the first indication information to the second device. The first indication information includes the ID of the first sending processing model and/or the ID of the first reception processing model. Exemplarily, the CSI sent by the second device may be obtained by the measurement of the second device based on the reference signal.

Accordingly, before the second device receives the second complex signals for carrying the first information from the first device, the information transmission method further includes the following operation. The second device receives the first indication information from the first device. The first indication information includes the ID of the first reception processing model for performing the second processing and/or the ID of the first sending processing model corresponding to the first reception processing model. The ID of the first reception processing model and/or the ID of the first sending processing model is/are determined by the first device based on the CSI sent by the second device.

In the above embodiments, the implementation manner(s) of the first processing/second processing among various implementation manners is/are implicitly determined by indicating the model ID between the first device and the second device. In some embodiments, related information of the first processing/second processing may also be determined based on the improved MCS (i.e. modulation and precoding scheme) information. Exemplarily, the MCS information may be determined by the first device based on the CSI, the first device determines related information of the first processing according to the MCS information, and causes the second device to determine related information of the second processing matched with the first processing by transmitting the MCS information.

Specifically, in some embodiments, before the first device performs the first processing based on the first bitstream carrying the first information, the information transmission method further includes the following operation. The first device determines MCS information based on the CSI. The MCS information corresponds to the first order, and the first order is the number of information bits sent by the first device through antenna(s) on a single RE. The MCS information is used by the first device to determine related information of the first processing. The first device sends the MCS information to the second device.

Accordingly, before the second device receives the second complex signals for carrying the first information from the first device, the information transmission method further includes the following operation. The second device receives MCS information from the first device. The MCS information corresponds to the first order, and the first order is the number of information bits sent by the first device through antenna(s) on a single RE. The MCS information is determined by the first device based on the CSI. The second device determines related information of the second processing based on the MCS information.

Exemplarily, the MCS information may be determined based on the CQI in the CSI. Different MCS information corresponds to different implementation manners of the first processing/second processing. For example, different MCS information may correspond to IDs of different sending processing models/reception processing models, or different MCS information may correspond to different processes in the first sending processing model/first reception processing model.

Exemplarily, different MCS information may correspond to different first orders. The first order is the number of information bits sent by the first device through the antenna(s) on a single RE. The first order may also be referred to as a modulation and precoding order. Unlike the existing modulation order, this first order does not correspond to a single stream/layer in precoding, but to the sum of the numbers of bits sent by all sending antennas on a single RE. Different first orders correspond to different implementation manners of the first processing/the second processing, and the first processing/the second processing can be adaptively adjusted according to the change of the channel. Specifically, different first orders may correspond to IDs of different sending processing models/reception processing models, or different first orders may correspond to different processes in the first sending processing model/first reception processing model.

In a practical application, an MCS table may be configured, which includes multiple MCS indexes and parameter information corresponding to each MCS index. Accordingly, the MCS information may be an MCS index. Each MCS index represents a modulation and precoding scheme, and different modulation and precoding schemes correspond to different implementation manners of the first processing/second processing, and also correspond to different first orders. The first device may determine the MCS index based on the CSI, so that the corresponding first order and the implementation manner of the first processing/second processing may be determined based on the MCS index. Alternatively, multiple MCS tables may be configured, and the effective MCS table may be configured by RRC signaling, so that the corresponding first order and the implementation manner of the first processing/second processing may be determined based on the MCS index and the effective MCS table.

In some embodiments, the information transmission method may further include the following operation. The first device determines, based on the MCS information, an ID of the first sending processing model for performing the first processing or input information of the first sending processing model.

In some embodiments, the operation that the second device determines, based on the MCS information, related information of the second processing includes the following operation. The second device determines, based on the MCS information, an ID of the first reception processing model for performing the second processing or input information of the first reception processing model.

As described above, in an embodiment, different MCS information may correspond to different model IDs. Based on this, the model ID may be determined based on the MCS information, so that the corresponding first processing may be implemented by using the model corresponding to the MCS.

In another embodiment, different MCS information may correspond to different processes of the same model. Specifically, the input information of the first sending processing model/the first reception processing model may be determined based on the MCS information, then the first sending processing model/the first reception processing model may perform adaptive processing according to the MCS information.

Exemplarily, the MCS information may be taken as one of the input information of the model. For example, the input information of the first sending processing model may include the first bitstream and the MCS information, or include the first bitstream and other information determined based on the MCS information, so that the first sending processing model performs the first processing on the first bitstream based on the MCS information. Similarly, the input information of the first reception processing model may include complex signals and the MCS information, or may include complex signals and other information determined based on the MCS information, so that the first reception processing model performs the second processing on the complex signals based on the MCS. The other information determined based on the MCS information may refer to a preprocessing result of the MCS information.

It may be understood that the specific implementation manner of the first processing/second processing determined based on the CSI in the various above-described embodiments is beneficial to realize link adaptation on the basis of performing the first processing/second processing, thereby improving system transmission performance, for example, reducing the bit error rate/false alarm rate, improving spectral efficiency, and the like.

In some embodiments, the above information transmission method may also involve an improvement in the determination method of Transport Block Size (TBS). Specifically, the information transmission method may further include the following operation. The first device determines a TBS based on the first order. The TBS is used for the first device to perform channel coding on the first information.

Exemplarily, after determining the first order and the channel coding code rate, the size of the current transport block (TB), i.e. the TBS, may be calculated. Furthermore, channel coding is performed based on the TBS, and then first processing and mapping of complex signals to antenna ports, etc. are performed based on the first order to transmit the first information.

Accordingly, for the second device, in some embodiments, the information transmission method may further include the following operation. The second device determines a TBS based on the first order. The TBS is used to perform channel decoding on the second bitstream and/or feature information related to the second bitstream.

In some embodiments, the operation that the first device determines the TBS based on the first order includes the following operation. The first device determines the TBS based on a product of the first order, the number of REs used for transmission in a current slot, and a code rate for channel coding.

Accordingly, in some embodiments, the operation that the second device determines, based on the first order, a TBS for performing channel decoding on the second bitstream and/or feature information related to the second bitstream includes the following operation. The second device determines the TBS based on a product of the first order, the number of REs used for transmission in a current slot, and a code rate for channel decoding.

Exemplarily, the subject of the calculation method of the TBS is as follows:

$$TBS = N_{RE} * CR * Q_{mp} \qquad \text{Formula (1)}$$

Where, $N_{RE}$ represents the total number of REs available for data transmission in the current slot, and CR represents the code rate for channel coding, $Q_{mp}$ represents the above first order. It should be noted that the above formula (1) defines the calculation subject of TBS, but in practical applications, constraints may be added on this basis, and corresponding processing may be performed for different conditions, so that the calculation method of the TBS can meet the practical application requirements. For example, the TBS must not be greater than a set maximum value or less than a set minimum value, or the TBS must be an integer multiple of a certain numerical value.

It may be understood that by expanding the indication manner of the MCS and adjusting the calculation method of the TBS in the related art, the first processing/second processing and the operations of the original traditional modules can be compatible, so that the information transmission method can work together under the original system framework, and the stability of the system can be guaranteed.

The embodiments of the present disclosure further provide a triggering manner of the first processing/the second processing, so that switching may be performed between a conventional solution and an integrated solution based on the first processing/the second processing to achieve compatibility.

In some embodiments, before the first device performs the first processing based on the first bitstream carrying the first information, the information method further includes the following operation. The first device sends the first trigger information to the second device. The first trigger information is used to instruct the second device to perform the second processing corresponding to the first processing.

Exemplarily, the first trigger information represents that the sending end performs the first processing. It may be understood that the first trigger information instructs the receiving end to perform the corresponding second processing by indicating that the sending end performs the first processing.

In some embodiments, the first trigger information includes at least one of: second indication information for instructing the second device to perform the second processing; an ID of the second sending processing model; an ID of the second reception processing model corresponding to the second sending processing model; or an ID of the first CSI feedback model. The second sending processing model is a model desired by the first device for performing the first processing. The first CSI feedback model is a model desired by the first device for performing CSI feedback.

Exemplarily, the first trigger information may include the second indication information that represents execution of the first processing and an ID of the sending processing model (second sending processing model) desired by the sending end, to request or instruct the receiving end to perform the second processing by using the matched reception processing model.

Exemplarily, the first trigger information may include the second indication information that represents execution of the first processing and an ID of the reception processing model (second reception processing model) desired by the sending end, to request or instruct the receiving end to perform the second processing by using the reception processing model.

Exemplarily, the first trigger information may include an ID of the reception processing model (second reception processing model) desired by the sending end and an ID of the CSI feedback model (first CSI feedback model) desired by the sending end. The ID of the second reception processing model is carried in the first trigger information to indicate the execution of the first processing, and the receiving end is requested or instructed to perform the second processing by using the reception processing model. The receiving end is requested or instructed to use the CSI feedback model for CSI feedback by carrying the ID of the first CSI feedback model in the first trigger information.

It should be noted that the first trigger information may include any one kind of the above-mentioned information or a combination of multiple other kinds of information, and may be set according to different scenarios or demands in practical applications, and the setting methods are not listed here.

Accordingly, before the second device receives the second complex signals for carrying the first information from the first device, the information transmission method further includes the following operation. The second device receives the first trigger information from the first device. The first trigger information is used to instruct the second device to perform the second processing.

In some embodiments, the first trigger information includes at least one of: second indication information for instructing the second device to perform the second processing; an ID of the second reception processing model; an ID of the second sending processing model corresponding to the second reception processing model; or an ID of the first CSI feedback model. The second reception processing model is a model desired by the first device for performing the second processing. The first CSI feedback model is a model desired by the first device for performing CSI feedback.

The setting of the first trigger information may be made with reference to the above-described embodiment, and the description thereof will not be repeated here.

In some embodiments, the information transmission method further includes the following operation. The first device receives the first feedback information from the second device. The first feedback information includes at least one of the following: whether the second device agrees to perform the first processing; an ID of the third sending processing model; an ID of the third reception processing model corresponding to the third sending processing model; or an ID of the second CSI feedback model. The third sending processing model is a model desired by the second device for performing the first processing. The second CSI feedback model is a model desired by the second device for performing CSI feedback.

Exemplarily, the receiving end may feed back to the sending end whether the receiving end agrees to perform the first processing. In a case that the receiving end agrees to perform the first processing, the first feedback information may further carry an ID of the sending processing model (third sending processing model) desired by the receiving end or an ID of the reception processing model (third reception processing model) desired by the receiving end. In a case that the receiving end does not agree to perform the first processing, the sending end and the receiving end may use the conventional solution for sending and receiving information.

Exemplarily, the receiving end may feed back to the sending end whether the receiving end agrees to perform the first processing. If the receiving end agrees to perform the first processing, it represents that the receiving end agrees to use a sending processing model (second sending processing model) desired by the sending end or a reception processing model (second reception processing model) desired by the sending end. The receiving end may also carry an ID of a CSI feedback model (second CSI feedback model) desired by the receiving end in the first feedback information.

It should be noted that the first trigger information may include any one kind of the above-mentioned information or a combination of multiple other kinds of information, and may be set according to different scenarios or demands in practical applications, and the setting methods are not listed here.

Accordingly, in some embodiments, for the second device, the information transmission method further includes the following operation. The second device sends the first feedback information to the first device. The first feedback information includes at least one of the following: whether the second device agrees to perform the second processing; an ID of the third reception processing model; an ID of the third sending processing model corresponding to the third reception processing model; or an ID of the second CSI feedback model. The third reception processing model is a model desired by the second device for performing the second processing. The second CSI feedback model is a model desired by the second device for performing CSI feedback.

The setting of the first feedback information may be made with reference to the foregoing embodiment, and the description thereof will not be repeated here.

In some embodiments, before the second device receives the second complex signals from the first device for carrying the first information, the method further includes the following operation. The second device sends the second trigger information to the first device. The second trigger information is used to instruct the first device to perform the first processing corresponding to the second processing.

Exemplarily, the second trigger information represents that the receiving end performs the second processing. It may be understood that the first trigger information instructs the receiving end to perform the second processing by indicating that the sending end performs the corresponding first processing.

In some embodiments, the second trigger information includes at least one of: the third indication information for instructing the first device to perform the first processing; an ID of the third reception processing model, an ID of the third sending processing model corresponding to the third reception processing model; or an ID of the second CSI feedback model. The third reception processing model is a model desired by the second device for performing the second processing. The second CSI feedback model is a model desired by the second device for performing CSI feedback.

Exemplarily, the second trigger information may include the third indication information that represents execution of the second processing and an ID of the reception processing model (third reception processing model) desired by the receiving end, to request or instruct the sending end to perform the first processing by using the matched sending processing model.

Exemplarily, the second trigger information may include the third indication information that represents execution of the second processing and an ID of the sending processing model (third sending processing model) desired by the receiving end, to request or instruct the sending end to perform the first processing by using the sending processing model.

Exemplarily, the second trigger information may include an ID of the sending processing model (third sending processing model) desired by the receiving end and an ID of a CSI feedback model (second CSI feedback model) desired by the receiving end. The ID of the third sending processing model is carried in the second trigger information to indicate the execution of the first processing, and the sending end is requested or instructed to perform the first processing by using the sending processing model. It is indicated, by carrying the ID of the second CSI feedback model in the second trigger information, that the receiving end uses the CSI feedback model for CSI feedback.

It should be noted that the second trigger information may include any one kind of the above-mentioned information or a combination of multiple other kinds of information, and may be set according to different scenarios or demands in practical applications, and the setting methods are not listed here.

Accordingly, in some embodiments, the sending and reception of information is implemented by triggering the usage of the first processing/second processing by the second device. Specifically, before the first device performs the first processing based on the first bitstream carrying the first information, the information transmission method further includes the following operation. The first device receives the second trigger information from the second device. The second trigger information is used to instruct the first device to perform the first processing.

In some embodiments, the second trigger information includes at least one of: the third indication information for instructing the first device to perform the first processing; an ID of the third sending processing model for performing the first processing; an ID of the third reception processing model corresponding to the third sending processing model; or an ID of the second CSI feedback model for performing CSI feedback. The third sending processing model is a model desired by the second device for performing the first processing. The second CSI feedback model is a model desired by the second device for performing CSI feedback.

The setting of the second trigger information may be made with reference to the above-described embodiment, and the description thereof will not be repeated here.

In some embodiments, the information transmission method further includes the following operation. The first device sends the second feedback information to the second device. The second feedback information includes at least one of the following: whether the first device agrees to perform the first processing; an ID of the second sending processing model; an ID of the second reception processing model corresponding to the second sending processing model; or an ID of the first CSI feedback model. The second sending processing model is a model desired by the first device for performing the first processing. The first CSI feedback model is a model desired by the first device for performing CSI feedback.

Exemplarily, the sending end may feed back to the receiving end whether the sending end agrees to perform the first processing. In a case that the sending end agrees to perform the first processing, the ID of the sending processing model (second sending processing model) desired by the sending end or the ID of the reception processing model (second reception processing model) desired by the sending end may be further carried in the second feedback information. In a case that the sending end does not agree to perform the first processing, the sending end and the receiving end may use the conventional solution for sending and receiving information.

Exemplarily, the sending end may feed back to the receiving end whether the sending end agrees to perform the first processing. If the sending end agrees to perform the first processing, it represents that the sending end agrees to use a sending processing model (third sending processing model) desired by the receiving end or a reception processing model (third reception processing model) desired by the receiving end. The sending end may also carry an ID of a CSI feedback model (first CSI feedback model) desired by the sending end in the second feedback information.

It should be noted that the second trigger information may include any one kind of the above-mentioned information or a combination of multiple other kinds of information, and may be set according to different scenarios or demands in practical applications, and the setting methods are not listed here.

Accordingly, in some embodiments, for the second device, the information transmission method further includes the following operation. The second device receives the second feedback information from the first device. The second feedback information includes at least one of the following: whether the first device agrees to perform the first processing; an ID of the second reception processing model; an ID of the second sending processing model corresponding to the second reception processing model; or an ID of the first CSI feedback model. The second reception processing model is a model desired by the first device for performing the second processing. The first CSI feedback model is a model desired by the first device for performing CSI feedback.

The setting of the second feedback information may be made with reference to the above-described embodiment, and the description thereof will not be repeated here.

In order to understand the above-described technical solutions more clearly, a specific application example of the information transmission method is provided below by taking the first device as a network device and the second device as UE as an example. Here, the network device may be a base station, an access point, a relay point, or the like. For convenience of description, the technical solution will be described below by taking the base station as an example.

In this application example, the base station end determines the related configuration of joint modulation and precoding based on the CSI information fed back by the UE end, and performs signal transmission accordingly. Here, the joint modulation and precoding refers to that conversion from the bitstream to the complex signals is performed though the above-described first processing, and accordingly, conversion from the complex signals to the bitstream or feature information of the bitstream is performed through the second processing. Referring to the foregoing description, the joint modulation and precoding may not include a modulation operation/module, and may not include a precoding operation/module.

1. Trigger of the joint modulation and precoding mode

Since joint modulation and precoding depend on a certain capability or condition at two ends of the sending and receiving of the signal (for example, two ends of the sending and receiving of the signal have matched models and the capability to run corresponding models), before performing joint modulation and precoding, whether to enter this mode needs to be determined by the trigger process.

(1) Triggering of base station

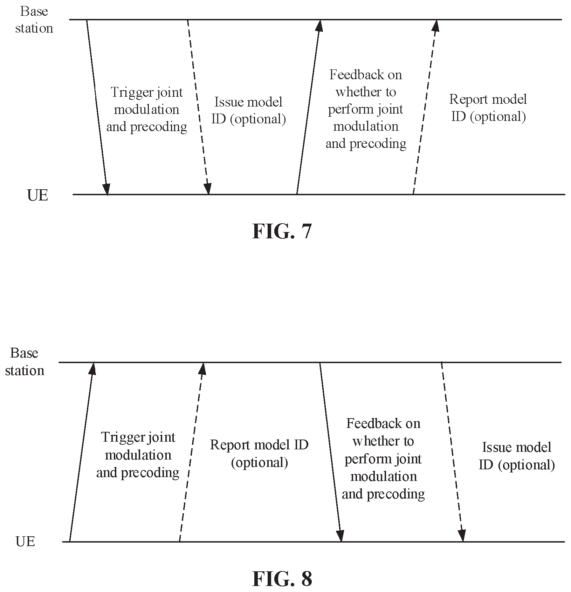

FIG. 7 is a schematic diagram of joint modulation and precoding triggered by a base station. As illustrated in FIG. 7, the joint modulation and precoding is triggered by the base station, and the trigger signaling (that is, the first trigger information) may be sent to the UE by means of an Radio Resource Control (RRC) message, a MAC Control Element (MAC CE), a Downlink Control Information (DCI), or the like. The potential information in the trigger signaling may include, but is not limited to: a) triggering joint modulation and precoding; b) a model ID used by the base station to perform joint modulation and precoding; c) a model ID used by the UE to perform joint signal detection and demodulation (i.e., second processing); d) a model ID used by the UE to perform CSI feedback (if CSI feedback is implemented by using an AI model).

As corresponding feedback, information (first feedback information) that the UE potentially needs to report to the base station may include, but is not limited to: a) whether joint modulation and precoding are supported or agreed to; b) a model ID used by the UE to perform joint signal detection and demodulation; c) a model ID used by the base station to perform joint modulation and precoding; d) a model ID used by the UE to perform CSI feedback (if CSI feedback is implemented by using an AI model).

(2) Triggering of UE

FIG. 8 is a schematic diagram of joint modulation and precoding triggered by a terminal. As illustrated in FIG. 8, the trigger is triggered by the UE, and the trigger signaling (second trigger information) may be implemented by RRC, UCI, PUSCH, or the like. The potential information in the trigger signaling may include, but is not limited to: a) triggering joint modulation and precoding; b) a model ID used by the UE to perform joint signal detection and demodulation; c) a model ID used by the base station to perform joint modulation and precoding; d) a model ID used by the UE to perform CSI feedback (if CSI feedback is implemented by using an AI model).

As corresponding feedback, information (second feedback information) that the base station potentially needs to send to the UE may include, but is not limited to: a) whether joint modulation and precoding are supported or agreed to; b) a model ID used by the base station to perform joint modulation and precoding; c) a model ID used by the UE to perform joint signal detection and demodulation; d) a model ID used by the UE to perform CSI feedback (if CSI feedback is implemented by using an AI model).

2. The station determines appropriate joint modulation and precoding manner based on CSI

In modern wireless communication systems, link adaptation is an important part to ensure system performance. For example, in LTE and NR, the modulation manner and precoding manner of the signal are respectively indicated by different parts in the CSI feedback (see FIG. 2). Specifically, RI and PMI in CSI feedback determine the number of precoding streams and the final precoding matrix, while CQI determines MCS, and then determines the modulation order for a single stream/layer.

In order to support link adaptation under joint modulation and precoding, the system needs to be able to select and indicate the joint modulation and precoding manner based on CSI. Therefore, the existing MCS indication manner is expanded and the calculation manner of the transmission packet size (TBS) is adjusted. The specific solution is as follows.

(1) Explicit indication of the joint modulation and precoding manner

A new MCS table (MCS index table (s)) is added to the standard to correspond to the selection and indication of joint modulation and precoding manner. Different from the MCS index table in the existing standard, different MCS indexes in the table will correspond to different modulation and precoding orders and different code rates for the channel coding.

The modulation and precoding order (equivalent to the first order described above) represents how many information bits (for example, 1, 2, 3, 4, 5, 6, 7, 8...) the signal on a single RE will carry and is no longer be bound to the traditional modulation manner (for example, QPSK, 16QAM, 64QAM, 256QAM, 1024QAM) in existing standard. In addition, unlike the existing modulation order, the number of bits no longer corresponds to a single stream/layer in precoding, but to the sum of the number of bits sent by all sending antennas on the RE.

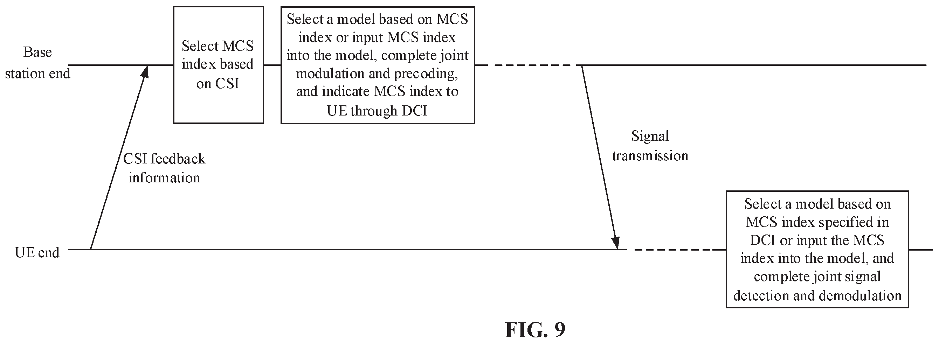

FIG. 9 is a schematic diagram of determining a joint modulation and precoding manner based on MCS information. As illustrated in FIG. 9, the base station may obtain or infer the MCS index to be selected based on the CSI feedback. If there are multiple MCS tables, RRC signaling may be used to configure which table is valid. The selected MCS index is notified to the UE by DCI. The base station and UE will guide the AI model to send and receive data based on the selected MCS index.

Specific manners to guide the AI model to send and receive data based on the selected MCS index include one of the following manners a) and b).

a) A model is selected based on MCS index (different models correspond to different modulation and precoding manners).

b) The MCS index or its preprocessed result is input into the model to guide the operation of the model. That is, the model adjusts its execution effect according to the input MCS index on its own.

(2) Implicit indication of joint modulation and precoding manner

It is assumed that the base station has multiple AI models for implementing signal processing corresponding to different modulation and precoding orders, and respective AI models have different IDs for models. Similarly, the UE end also has multiple sets of AI models corresponding to the base station end. The system may implement the implicit indication of the joint modulation and precoding manner by indicating the model ID. The potential options include the following a) and b).

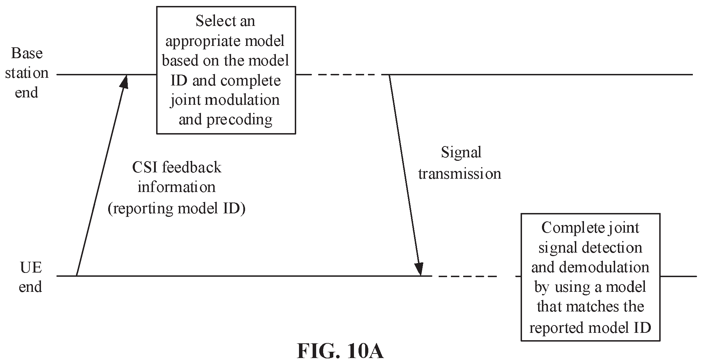

a) As illustrated in FIG. 10A, the model ID is added to the CSI feedback content, so that the UE may directly indicate to the base station which model to use for joint modulation and precoding through CSI feedback. The UE itself may select the matched model at the receiving end for receiving signal processing, without the need for signaling indication from the base station.

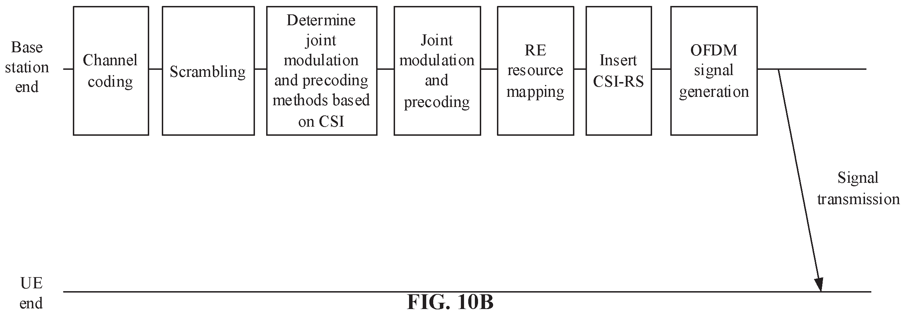

b) As illustrated in FIG. 10B, the model ID is not included in the CSI, and the base station itself selects a model suitable for use based on the content of the CSI, and notifies the model ID or the corresponding model ID at the receiving end to the UE through DCI.

After determining the joint modulation and precoding manner (corresponding to the modulation and precoding order), the size of the current transport block (TB) may be calculated. Different from the existing calculation manner defined in the existing standard, the subject of the calculation method of TBS refers to the formula (1) in the foregoing embodiment.

3. The base station implements joint modulation and precoding configuration

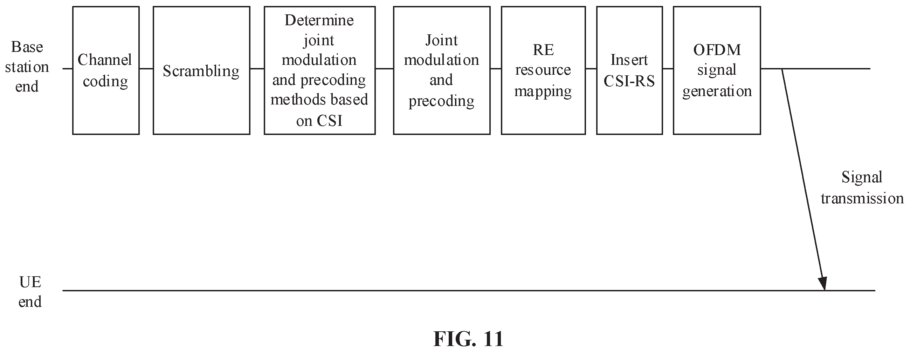

After completing the above processes, the base station will implement integrated signal modulation and precoding through the AI model. FIG. 11 is a schematic diagram of complete process flows of a network device. Different from the processing flows in the existing standard, the AI model at the transmitter end replaces the modulation, layer mapper and precoding modules in the original framework in one fell swoop, and integrally implements the mapping from the channel-coded bit stream to complex signals that are enable to be sent on multiple antennas.

The input information of the AI model for implementing joint modulation and precoding needs to include the following: a) bitstream to be processed (channel coded, scrambled information bits); b) CSI feedback information (which may be partial or complete information, may be original CSI information or information obtained by inference or post-processing based on the CSI); c) a reference signal for channel estimation, such as DMRS (optional).

The input information of the AI model for implementing the joint modulation and precoding needs to include: a) complex signals that are enable to be mapped to different antenna ports to be sent.

4. UE implements signal reception

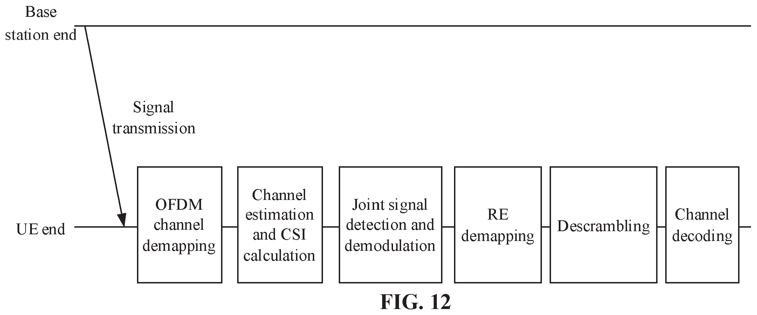

On the UE end, the original modular signal detection and demodulation part will be replaced by an AI model to implement integrated signal detection and demodulation. FIG. 12 is a schematic diagram of complete processing flows of the UE.

The input information of the AI model for implementing joint signal detection and demodulation needs to include: a) the received signal (it may be the signal received on the reception antenna(s), or it may be the received signal processed by a certain procedure, such as OFDM demapping, etc.); b) channel information (it is optional, and may be channel information obtained by performing channel estimation on a reference signal, such as CSI-RS and/or DMRS, may be information obtained by performing a certain procedure on the estimated channel).

The input information of the AI model for implementing joint signal detection and demodulation needs to include: a) information bits recovered after demodulation and/or the maximum log-likelihood ratio obtained by demodulation.

It should be noted that, in the above application example, joint modulation and precoding operating at the sending end and joint signal detection and demodulation at the receiving end are all implemented based on the AI model. Although the AI model is one possible implementation manner of the embodiments of the present disclosure, the scope of protection of the present disclosure may not be limited thereto, but is merely an example. The processing of the AI model may also be replaced with the processing of other signal processing functional modules or units.

In addition, in the above-described application example, the base station is the sending end and the UE is the receiving end, but the present invention is not limited thereto. For example, the UE may serve as a signal sending end and the base station may serve as a signal receiving end.

It may be seen that the embodiments of the present disclosure break the modular division of the existing wireless system, and integrate and jointly designs the modulation and precoding at the signal sending end and the detection and demodulation at the receiving end, thereby significantly improving the performance of the wireless communication system, such as improving the information transmission rate, reducing the bit error rate/false alarm rate, and improving the spectrum efficiency.

By expanding the physical layer processing flows of the existing standard, and modifying the modulation maner, precoding manner, TBS and other related indication signaling, it is compatible with the AI module and the original traditional modules (such as channel coding, channel decoding, resource mapping, OFDM waveform related processing, etc.), so that it can work together under the existing system framework.

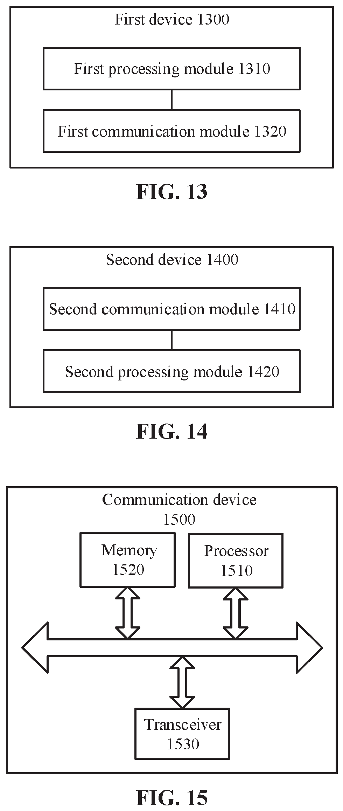

FIG. 13 is a schematic block diagram of the first device 1300 according to an embodiment of the present disclosure. The first device 1300 may include the first processing module 1310 and the first communication module 1320.

The first processing module 1310 is configured to perform the first processing on the first bitstream carrying the first information, to obtain the first complex signals carrying the first information.

The first communication module 1320 is configured to send the first complex signals to the second device.

In one embodiment, the first bitstream conversion is obtained by performing channel coding and scrambling on the first information, and the first complex signals are mapped to multiple second complex signals corresponding to different antenna ports when the first complex signals are sent.

In one embodiment, the first processing is performed by a pre-configured first sending processing model. Input information of the first sending processing model includes the first bitstream, and output information of the first sending processing model includes first complex signals.

In one embodiment, the first sending processing model is used to perform the first processing on the first bitstream based on related information of CSI sent by the second device and/or a reference signal used for channel estimation by the second device.

In one implementation, the first communication module 1320 is further configured to receive CSI feedback information from the second device. The CSI feedback information includes an ID of the first sending processing model for performing the first processing and/or an ID of the first reception processing model corresponding to the first sending processing model.

In one embodiment, the first processing module 1310 is further configured to determine, based on CSI sent by the second device, an ID of the first sending processing model for performing the first processing and/or an ID of the first reception processing model corresponding to the first sending processing model.

The first communication module 1320 is further configured to send the first indication information to the second device. The first indication information includes an ID of the first sending processing model and/or an ID of the first reception processing model.

In one embodiment, the first processing module 1310 is further configured to determine MCS information based on CSI. The MCS information corresponds to the first order. The first order is the number of information bits sent by the first device through antenna(s) on a single RE. The MCS information is used to determine related information of the first processing.

The first communication module 1320 is further configured to send the MCS information to the second device.

In one implementation, the first processing module 1310 is further configured to determine, based on the MCS information, an ID of the first sending processing model for performing the first processing or input information of the first sending processing model.

In one embodiment, the first processing module 1310 is further configured to determine a TBS based on the first order. The TBS is used to perform channel coding on the first information.

In one embodiment, the first processing module 1310 is further configured to determine the TBS based on a product of the first order, the number of REs used for transmission in the current slot, and a code rate for channel coding.

In one embodiment, the first communication module 1320 is further configured to send the first trigger information to the second device. The first trigger information is used to instruct the second device to perform the second processing corresponding to the first processing.

In one embodiment, the first trigger information includes at least one of: second indication information for instructing the second device to perform the second processing; an ID of the second sending processing model; an ID of the second reception processing model corresponding to the second sending processing model; or an ID of the first CSI feedback model. The second sending processing model is a model desired by the first device for performing the first processing. The first CSI feedback model is a model desired by the first device for performing CSI feedback.

In one embodiment, the first communication module 1320 is configured to receive the first feedback information from the second device. The first feedback information includes at least one of the following: whether the second device agrees to perform the first processing; an ID of the third sending processing model; an ID of the third reception processing model corresponding to the third sending processing model; or an ID of the second CSI feedback model. The third sending processing model is a model desired by the second device for performing the first processing. The second CSI feedback model is a model desired by the second device for performing CSI feedback.

In one embodiment, the first communication module 1320 is further configured to receive the second trigger information from the second device. The second trigger information is used to instruct the first device to perform the first processing.

In one embodiment, the first trigger information includes at least one of: the third indication information for instructing the first device to perform the first processing; an ID of the third sending processing model; an ID of the third reception processing model corresponding to the third sending processing model; or an ID of the second CSI feedback model. The third sending processing model is a model desired by the second device for performing the first processing. The second CSI feedback model is a model desired by the second device for performing CSI feedback.

In one embodiment, the first communication module 1320 is further configured to send the second feedback information to the second device. The second feedback information includes at least one of the following: whether the first device agrees to perform the first processing; an ID of the second sending processing model for performing the first processing; an ID of the second reception processing model; or an ID of the first CSI feedback model. The second sending processing model is a model desired by the first device for performing the first processing. The first CSI feedback model is a model desired by the first device for performing CSI feedback.

The first device 1300 according to the embodiment of the present disclosure can implement the corresponding functions of the first device in the above-described method embodiments. For the flows, functions, implementation manners, and beneficial effects corresponding to respective modules (sub-modules, units, components, etc.) in the first device 1300, the reference is made to the corresponding description in the above-described method embodiments, which will not be repeated herein. The functions described with respect to respective modules (sub-modules, units, components, etc.) in the first device 1300 of the embodiments of the present disclosure may be implemented by different modules (sub-modules, units, components, etc.), or may be implemented by the same module (sub-module, unit, component, etc.).

FIG. 14 is a schematic block diagram of the second device 1400 according to an embodiment of the present disclosure. The network device 1400 may include the second communication module 1410 and the second processing module 1420.

The second communication module 1410 is configured to receive the second complex signals from the first device for carrying first information.

The second processing module 1420 is configured to perform the second processing on the second complex signals, to obtain the second bitstream carrying the first information and/or feature information related to the second bitstream.

In one embodiment, the second processing module is further configured to perform channel decoding and descrambling on the second bitstream and/or the feature information related to the second bitstream to obtain the first information.

In one embodiment, the second processing is performed by a pre-configured first reception processing model. Input information of the first reception processing model includes the second complex signals and/or the third complex signals obtained by performing demapping on the second complex signals, and the output information of the first reception processing model includes the second bitstream for the first information and/or feature information related to the second bitstream.

In one embodiment, the first reception processing model is used to process the second complex signals and/or the third complex signals based on the channel information.

In one embodiment, the second communication module 1410 is further configured to send CSI feedback information to the first device. The CSI feedback information includes an ID of the first reception processing model for performing the second processing and/or an ID of the first sending processing model corresponding to the first reception processing model.

In one embodiment, the second communication module 1410 is further configured to receive the first indication information from the first device. The first indication information includes an ID of the first reception processing model for performing the second processing and/or an ID of the first sending processing model corresponding to the first reception processing model. The ID of the first reception processing model and/or the ID of the first sending processing model is determined by the first device based on the CSI sent by the second device.

In one embodiment, the second communication module 1410 is further configured to receive MCS information from the first device. The MCS information corresponds to the first order. The first order is the number of information bits sent by the first device through antenna(s) on a single RE. The MCS information is determined by the first device based on CSI.

The second processing module 1420 is further configured to determine, based on the MCS information, related information of the second processing.

In one embodiment, the second processing module 1420 is further configured to determine, based on the MCS information, an ID of the first reception processing model for performing the second processing or input information of the first reception processing model.

In one embodiment, the second processing module 1420 is further configured to determine a TBS based on the first order. The TBS is used for performing channel decoding on the second bitstream and/or the feature information related to the second bitstream.

In one embodiment, the second processing module 1420 is further configured to determine the TBS based on a product of the first order, the number of REs used for transmission in the current slot, and a code rate for channel decoding.

In one embodiment, the second communication module 1410 is further configured to receive the first trigger information from the first device. The first trigger information is used to instruct the second device to perform the second processing.

In one embodiment, the first trigger information includes at least one of: the second indication information for instructing the second device to perform the second processing; an ID of the second reception processing model; an ID of the second sending processing model corresponding to the second reception processing model; or an ID of the first CSI feedback model. The second reception processing model is a model desired by the first device for performing the second processing. The first CSI feedback model is a model desired by the first device for performing CSI feedback.

In one embodiment, the second communication module 1410 is further configured to send the first feedback information to the first device. The first feedback information includes at least one of the following: whether the second device agrees to perform the second processing; an ID of the third reception processing model; an ID of the third sending processing model corresponding to the third reception processing model; or an ID of the second CSI feedback model. The third reception processing model is a model desired by the second device for performing the second processing. The second CSI feedback model is a model desired by the second device for performing CSI feedback.

In one embodiment, the second communication module 1410 is further configured to send the second trigger information to the first device. The second trigger information is used to instruct the first device to perform the first processing corresponding to the second processing.

In one embodiment, the first trigger information includes at least one of: the third indication information for instructing the first device to perform the first processing; an ID of the third reception processing model; a n ID of the third sending processing model corresponding to the third reception processing model; or an ID of the second CSI feedback model. The third reception processing model is a model desired by the second device for performing the second processing. The second CSI feedback model is a model desired by the second device for performing CSI feedback.

In one embodiment, the second communication module 1410 is further configured to receive the second feedback information from the first device. The second feedback information includes at least one of the following: whether the first device agrees to perform the first processing; an ID of the second reception processing model; an ID of the second sending processing model corresponding to the second reception processing model; or an ID of the first CSI feedback model. The second reception processing model is a model desired by the first device for performing the second processing. The first CSI feedback model is a model desired by the first device for performing CSI feedback.

The second device 1400 according to the embodiment of the present disclosure can implement the corresponding functions of the second device in the above-described method embodiments. For the flows, functions, implementation manners, and beneficial effects corresponding to respective modules (sub-modules, units, components, etc.) in the second device 1400, the reference is made to the corresponding description in the above-described method embodiments, which will not be repeated here. The functions described with respect to respective modules (sub-modules, units, components, etc.) in the second device 1400 of the embodiments of the present disclosure may be implemented by different modules (sub-modules, units, components, etc.), or may be implemented by the same module (sub-module, unit, component, etc.).

FIG. 15 is a schematic structural diagram of a communication device 1500 according to an embodiment of the present disclosure. The communication device 1500 includes a processor 1510. The processor 1510 may invoke and run a computer program from a memory to cause the communication device 1500 to implement the methods in the embodiments of the present disclosure.

In one embodiment, the communication device 1500 may further include a memory 1520. The processor 1510 may invoke and run a computer program from the memory 1520 to cause the communication device 1500 to implement the methods in the embodiments of the present disclosure.

The memory 1520 may be a separate device independent of the processor 1510 or may be integrated in the processor 1510.

In one embodiment, the communication device 1500 may further include a transceiver 1530. The processor 1510 may control the transceiver 1530 to communicate with other devices, in particular, may send information or data to or receive information or data sent by other devices.

Here, the transceiver 1530 may include a transmitter and a receiver. The transceiver 1530 may further include one or more antennas.

In one embodiment, the communication device 1500 may be the first device in the embodiments of the present disclosure, and the communication device 1500 may implement corresponding procedures implemented by the first device in various methods of the embodiments of the present disclosure, which will not be described herein for the sake of brevity.

In one embodiment, the communication device 1500 may be the second device in the embodiments of the present disclosure, and the communication device 1500 may implement corresponding procedures implemented by the second device in various methods of the embodiments of the present disclosure, which will not be described here for the sake of simplicity.

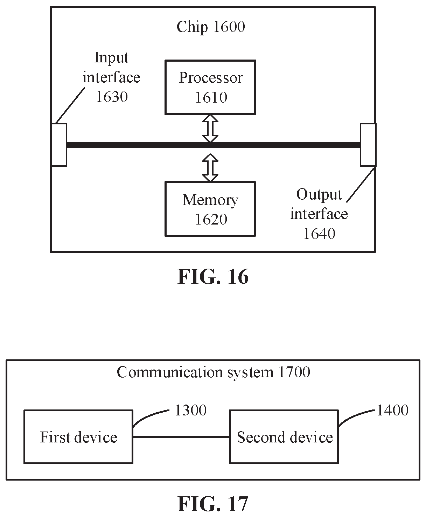

FIG. 16 is a schematic structural diagram of a chip 1600 according to an embodiment of the present disclosure. The chip 1600 includes a processor 1610. The processor 1610 may invoke and run a computer program from a memory to implement the methods in the embodiments of the present disclosure.

In one embodiment, the chip 1600 may further include a memory 1620. Here, the processor 1610 may invoke and run a computer program from the memory 1620 to implement the methods performed by the first device or the second device in the embodiments of the present disclosure.

The memory 1620 may be a separate device independent of the processor 1610 or may be integrated in the processor 1610.

In one embodiment, the chip 1600 may further include an input interface 1630. The processor 1610 may control the input interface 1630 to communicate with other devices or chips, specifically, may acquire information or data sent by other devices or chips.

In one embodiment, the chip 1600 may further include an output interface 1640. The processor 1610 may control the output interface 1640 to communicate with other devices or chips, specifically, may output information or data to other devices or chips.

In one embodiment, the chip may be applied to the first device in the embodiments of the present disclosure, and the chip may implement corresponding processes implemented by the first device in various methods of the embodiments of the present disclosure, which will not be described here for the sake of simplicity.

In one embodiment, the chip may be applied to the second device in the embodiments of the present disclosure, and the chip may implement corresponding processes implemented by the second device in various methods of the embodiments of the present disclosure, which will not be described here for the sake of simplicity.

The chips applied to the first device and the second device may be the same chip or different chips.

It should be understood that the chip mentioned in the embodiments of the present disclosure may also be referred to as a system level chip, a system chip, a chip system or a system-on-chip chip.

The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. The general-purpose processor mentioned above may be a microprocessor or any conventional processor or the like.

The memory mentioned above may be a volatile memory or a non-volatile memory, or may include both volatile and non-volatile memory. The non-volatile memory may be a read-only memory (ROM), a programmable read-only memory (PROM), an erasable PROM (EPROM), an electrically EPROM (EEPROM), or a flash memory. The volatile memory may be a random access memory (RAM).

It should be understood that the above memory is illustrative but not limiting, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a Direct Rambus RAM (DR RAM), and the like. That is, the memory in the embodiments of the present disclosure is intended to include, but is not limited to, these and any other suitable type of memory.

FIG. 17 is a schematic block diagram of a communication system 1700 according to an embodiment of the present disclosure. The communication system 1700 includes the first device 1300 and the second device 1400.

The first device 1300 performs the first processing based on the first bitstream carrying the first information to obtain first complex signals carrying the first information. The first device 1300 sends the first information to the second device 1400 based on the first complex signals.

The second device 1400 receives the second complex signals from the first device 1300 for carrying the first information. The second device 1400 performs the second processing based on the second complex signals to obtain the second bitstream carrying the first information and/or feature information related to the second bitstream.

The first device 1300 may be used to implement the corresponding functions implemented by the first device in the above-described method, and the second device 1400 may be used to implement the corresponding functions implemented by the second device in the above-described method. For the sake of brevity, it will not be repeated here.

In the embodiments described above, it may be implemented in whole or in part by software, hardware, firmware, or any combination thereof. When implemented using software, it may be implemented in whole or in part in the form of a computer program product. The computer program product includes one or more computer instructions. When the computer program instructions are loaded and executed on a computer, the processes or functions according to embodiments of the present disclosure are generated in whole or in part. The computer may be a general purpose computer, a special purpose computer, a computer network, or other programmable device. The computer instructions may be stored in a computer-readable storage medium or sent from one computer-readable storage medium to another computer-readable storage medium, for example, the computer instructions may be sent from one website station, computer, server, or data center by wired (e.g., coaxial cable, optical fiber, Digital Subscriber Line (DSL)) or wireless (e.g., infrared, wireless, microwave, etc.) means to another website station, computer, server, or data center. The computer-readable storage medium may be any available medium accessible by a computer or a data storage device such as a server, a data center, or the like that contains one or more available medium integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above-described processes do not mean the sequence of execution, and the sequence of execution of each process should be determined by its function and internal logic, and should not constitute any limitation on the implementation of the embodiments of the present disclosure.

Those skilled in the art may clearly understand that for convenience and conciseness of the description, the specific working processes of the systems, apparatuses, and units described above may refer to the corresponding processes in the aforementioned method embodiments, which will not be repeatedly described herein.

The above is merely specific embodiments of the present disclosure, but the scope of protection of the present disclosure is not limited thereto, and any person skilled in the art can easily think of changes or substitutions within the technical scope disclosed in the present disclosure, which should be covered within the scope of protection of the present disclosure. Therefore, the scope of protection of the present disclosure should be based on the scope of protection of the claims.

**Claims**

1.  An information transmission method, comprising:

    perform, by a first device, first processing on a first bitstream carrying first information, to obtain first complex signals carrying the first information; and
    sending, by the first device, the first complex signals to a second device.

2.  The method of claim 1, wherein the first bitstream is obtained by performing channel coding and scrambling on the first information, and the first complex signals are mapped to a plurality of second complex signals corresponding to different antenna ports when the first complex signals are sent.

3.  The method of claim 1 or 2, wherein the first processing is performed by a pre-configured first sending processing model, input information of the first sending processing model comprises the first bitstream, and output information of the first sending processing model comprises the first complex signals.

4.  The method of claim 3, wherein the first sending processing model is used to perform the first processing on the first bitstream based on related information of Channel State Information (CSI) sent by the second device and/or a reference signal used for channel estimation by the second device.

5.  The method of any one of claims 1 to 4, wherein before the first device performs the first processing based on the first bitstream carrying the first information, the method further comprises:
    receiving, by the first device, CSI feedback information from the second device, wherein the CSI feedback information comprises an identifier (ID) of a first sending processing model for performing the first processing and/or an ID of a first reception processing model corresponding to the first sending processing model.

6.  The method of any one of claims 1 to 4, wherein before the first device performs the first processing based on the first bitstream carrying the first information, the method further comprises:

    determining, by the first device based on CSI sent by the second device, an ID of a first sending processing model for performing the first processing and/or an ID of a first reception processing model corresponding to the first sending processing model; and
    sending, by the first device, first indication information to the second device, wherein the first indication information comprises the ID of the first sending processing model and/or the ID of the first reception processing model.

7.  The method of any one of claims 1 to 4, wherein before the first device performs the first processing based on the first bitstream carrying the first information, the method further comprises:

    determining, by the first device, Modulation and Precoding Scheme (MCS) information based on CSI, wherein the MCS information corresponds to a first order, the first order is a number of information bits sent by the first device through antenna(s) on a single Resource Element (RE), and the MCS information is used by the first device to determine related information of the first processing; and
    sending, by the first device, the MCS information to the second device.

8.  The method of claim 7, further comprising:
    determining, by the first device based on the MCS information, an ID of a first sending processing model for performing the first processing or input information of the first sending processing model.

9. The method of claim 7 or 8, further comprising:
determining, by the first device, a Transport Block Size (TBS) based on the first order, wherein the TBS is used for the first device to perform channel coding on the first information.

10. The method of claim 9, wherein determining, by the first device, the TBS based on the first order comprises:
determining, by the first device, the TBS based on a product of the first order, a number of REs used for transmission in a current slot, and a code rate for channel coding.

11. The method of any one of claims 1 to 10, wherein before the first device performs the first processing based on the first bitstream carrying the first information, the method further comprises:
sending, by the first device, first trigger information to the second device, wherein the first trigger information is used to instruct the second device to perform second processing corresponding to the first processing.

12. The method of claim 11, wherein the first trigger information comprises at least one of following:

second indication information for instructing the second device to perform the second processing;
an ID of a second sending processing model, wherein the second sending processing model is a model desired by the first device for performing the first processing;
an ID of a second reception processing model corresponding to the second sending processing model; or
an ID of a first CSI feedback model, wherein the first CSI feedback model is a model desired by the first device for performing CSI feedback.

13. The method of claim 11 or 12, further comprising:
receiving, by the first device, first feedback information from the second device, wherein the first feedback information comprises at least one of following:

whether the second device agrees to perform the first processing;
an ID of a third sending processing model, wherein the third sending processing model is a model desired by the second device for performing the first processing;
an ID of a third reception processing model corresponding to the third sending processing model; or
an ID of a second CSI feedback model, wherein the second CSI feedback model is a model desired by the second device for performing CSI feedback.

14. The method of any one of claims 1 to 10, wherein before the first device performs the first processing based on the first bitstream carrying the first information, the method further comprises:
receiving, by the first device, second trigger information from the second device, wherein the second trigger information is used to instruct the first device to perform the first processing.

15. The method of claim 14, wherein the second trigger information comprises at least one of following:

third indication information for instructing the first device to perform the first processing;
an ID of a third sending processing model, wherein the third sending processing model is a model desired by the second device for performing the first processing;
an ID of a third reception processing model corresponding to the third sending processing model; or
an ID of a second CSI feedback model, wherein the second CSI feedback model is a model desired by the second device for performing CSI feedback.

16. The method of claim 14 or 15, further comprising:
sending, by the first device, second feedback information to the second device, wherein the second feedback information comprises at least one of following:

whether the first device agrees to perform the first processing;
an ID of a second sending processing model, wherein the second sending processing model is a model desired by the first device for performing the first processing;
an ID of a second reception processing model corresponding to the second sending processing model; or
an ID of a first CSI feedback model, wherein the first CSI feedback model is a model desired by the first device for performing CSI feedback.

17. An information transmission method, comprising:

receiving, by a second device, second complex signals from a first device for carrying first information; and performing, by the second device, second processing on the second complex signals, to obtain a second bitstream carrying the first information and/or feature information related to the second bitstream.

18. The method of claim 17, further comprising:
performing, by the second device, channel decoding and descrambling on the second bitstream and/or the feature information related to the second bitstream to obtain the first information.

19. The method of claim 17 or 18, wherein the second processing is performed by a pre-configured first reception processing model, input information of the first reception processing model comprises the second complex signals and/or third complex signals obtained by performing demapping on the second complex signals, and output information of the first reception processing model comprises the second bitstream for the first information and/or the feature information related to the second bitstream.

20. The method of claim 19, wherein the first reception processing model is used to process the second complex signals and/or the third complex signals based on channel information.

21. The method of any one of claims 17 to 20, wherein before the second device receives the second complex signals from the first device for carrying the first information, the method further comprises:
sending, by the second device, Channel State Information (CSI) feedback information to the first device, wherein the CSI feedback information comprises an identifier (ID) of a first reception processing model for performing the second processing and/or an ID of a first sending processing model corresponding to the first reception processing model.

22. The method of any one of claims 17 to 20, wherein before the second device receives the second complex signals from the first device for carrying the first information, the method further comprises:

receiving, by the second device, first indication information from the first device,
wherein the first indication information comprises an ID of a first reception processing model for performing the second processing and/or an ID of a first sending processing model corresponding to the first reception processing model, and the ID of the first reception processing model and/or the ID of the first sending processing model is determined by the first device based on CSI sent by the second device.

23. The method of any one of claims 17 to 20, wherein before the second device receives the second complex signals from the first device for carrying the first information, the method further comprises:

receiving, by the second device, Modulation and Coding Scheme (MCS) information from the first device, wherein the MCS information corresponds to a first order, the first order is a number of information bits sent by the first device through antenna(s) on a single Resource Element (RE), and the MCS information is determined by the first device based on CSI; and
determining, by the second device based on the MCS information, related information of the second processing.

24. The method of claim 23, wherein determining, by the second device based on the MCS information, the related information of the second processing comprises:
determining, by the second device based on the MCS information, an ID of a first reception processing model for performing the second processing or input information of the first reception processing model.

25. The method of claim 23 or 24, further comprising:
determining, by the second device, a Transport Block Size (TBS) based on the first order, wherein the TBS is used for performing channel decoding on the second bitstream and/or the feature information related to the second bitstream.

26. The method of claim 25, wherein determining, by the second device, the TBS based on the first order comprises:
determining, by the second device, the TBS based on a product of the first order, a number of REs used for transmission in a current slot, and a code rate for channel decoding.

27. The method of any one of claims 17 to 26, wherein before the second device receives the second complex signals from the first device for carrying the first information, the method further comprises:

receiving, by the second device, first trigger information from the first device, wherein the first trigger information is used to instruct the second device to perform the second processing.

28. The method of claim 27, wherein the first trigger information comprises at least one of following:

second indication information for instructing the second device to perform the second processing;
an ID of a second reception processing model, wherein the second reception processing model is a model desired by the first device for performing the second processing;
an ID of a second sending processing model corresponding to the second reception processing model; or
an ID of a first CSI feedback model, wherein the first CSI feedback model is a model desired by the first device for performing CSI feedback.

29. The method of claim 27 or 28, further comprising:
sending, by the second device, first feedback information to the first device, wherein the first feedback information comprises at least one of following:

whether the second device agrees to perform the second processing;
an ID of a third reception processing model, wherein the third reception processing model is a model desired by the second device for performing the second processing;
an ID of a third sending processing model corresponding to the third reception processing model; or
an ID of a second CSI feedback model, wherein the second CSI feedback model is a model desired by the second device for performing CSI feedback.

30. The method of any one of claims 17 to 25, wherein before the second device receives the second complex signals from the first device for carrying the first information, the method further comprises:
sending, by the second device, second trigger information to the first device, wherein the second trigger information is used to instruct the first device to perform first processing corresponding to the second processing.

31. The method of claim 30, wherein the second trigger information comprises at least one of following:

third indication information for instructing the first device to perform the first processing;
an ID of a third reception processing model, wherein the third reception processing model is a model desired by the second device for performing the second processing;
an ID of a third sending processing model corresponding to the third reception processing model; or
an ID of a second CSI feedback model, wherein the second CSI feedback model is a model desired by the second device for performing CSI feedback.

32. The method of claim 30 or 31, further comprising:
receiving, by the second device, second feedback information from the first device, wherein the second feedback information comprises at least one of following:

whether the first device agrees to perform the first processing;
an ID of a second reception processing model, wherein the second reception processing model is a model desired by the first device for performing the second processing;
an ID of a second sending processing model corresponding to the second reception processing model; or
an ID of a first CSI feedback model, wherein the first CSI feedback model is a model desired by the first device for performing CSI feedback.

33. A first device, comprising:

a first processing module, configured to perform first processing on a first bitstream carrying first information, to obtain first complex signals carrying the first information; and
a first communication module, configured to send the first complex signals to a second device.

34. The first device of claim 33, wherein the first bitstream is obtained by performing channel coding and scrambling on the first information, and the first complex signals are mapped to a plurality of second complex signals corresponding to different antenna ports when the first complex signals are sent.

35. The first device of claim 33 or 34, wherein the first processing is performed by a pre-configured first sending processing model, input information of the first sending processing model comprises the first bitstream, and output information of the first sending processing model comprises the first complex signals.

36. The first device of claim 35, wherein the first sending processing model is used to perform first processing on the first bitstream based on related information of Channel State Information (CSI) sent by the second device and/or a reference signal used for channel estimation by the second device.

37. The first device of any one of claims 33 to 36, wherein the first communication module is further configured to: receive CSI feedback information from the second device, wherein the CSI feedback information comprises an identifier (ID) of a first sending processing model for performing the first processing and/or an ID of a first reception processing model corresponding to the first sending processing model.

38. The first device of any one of claims 33 to 36, wherein

the first processing module is further configured to determine, based on CSI sent by the second device, an ID of a first sending processing model for performing the first processing and/or an ID of a first reception processing model corresponding to the first sending processing model; and
the first communication module is further configured to send first indication information to the second device, wherein the first indication information comprises the ID of the first sending processing model and/or the ID of the first reception processing model.

39. The first device of any one of claims 33 to 36, wherein

the first processing module is further configured to determine Modulation and Precoding Scheme (MCS) information based on CSI, wherein the MCS information corresponds to a first order, the first order is a number of information bits sent by the first device through antenna(s) on a single Resource Element (RE), and the MCS information is used to determine related information of the first processing; and
the first communication module is further configured to send the MCS information to the second device.

40. The first device of claim 39, wherein the first processing module is further configured to:
determine, based on the MCS information, an ID of a first sending processing model for performing the first processing or input information of the first sending processing model.

41. The first device of claim 39 or 40, wherein the first processing module is further configured to:
determine a Transport Block Size (TBS) based on the first order, wherein the TBS is used to perform channel coding on the first information.

42. The first device of claim 41, wherein the first processing module is further configured to:
determine the TBS based on a product of the first order, a number of REs used for transmission in a current slot, and a code rate for channel coding.

43. The first device of any one of claims 33 to 42, wherein the first communication module is further configured to:
send first trigger information to the second device, wherein the first trigger information is used to instruct the second device to perform second processing corresponding to the first processing.

44. The first device of claim 43, wherein the first trigger information comprises at least one of:

second indication information for instructing the second device to perform the second processing;
an ID of a second sending processing model, wherein the second sending processing model is a model desired by the first device for performing the first processing;
an ID of a second reception processing model corresponding to the second sending processing model; or
an ID of a first CSI feedback model, wherein the first CSI feedback model is a model desired by the first device for performing CSI feedback.

45. The first device of claim 43 or 44, wherein the first communication module is further configured to:
receive first feedback information from the second device, wherein the first feedback information comprises at least one of the following:

whether the second device agrees to perform the first processing;

an ID of a third sending processing model, wherein the third sending processing model is a model desired by the second device for performing the first processing;

an ID of a third reception processing model corresponding to the third sending processing model; or

an ID of a second CSI feedback model, wherein the second CSI feedback model is a model desired by the second device for performing CSI feedback.

46. The first device of any one of claims 33 to 42, wherein the first communication module is further configured to: receive second trigger information from the second device, wherein the second trigger information is used to instruct the first device to perform the first processing.

47. The first device of claim 46, wherein the second trigger information comprises at least one of following:

third indication information for instructing the first device to perform the first processing;

an ID of a third sending processing model, wherein the third sending processing model is a model desired by the second device for performing the first processing;

an ID of a third reception processing model corresponding to the third sending processing model; or

an ID of a second CSI feedback model, wherein the second CSI feedback model is a model desired by the second device for performing CSI feedback.

48. The first device of claim 46 or 47, wherein the first communication module is further configured to: send second feedback information to the second device, wherein the second feedback information comprises at least one of following:

whether the first device agrees to perform the first processing;

an ID of a second sending processing model, wherein the second sending processing model is a model desired by the first device for performing the first processing;

an ID of a second reception processing model corresponding to the second sending processing model; or

an ID of a first CSI feedback model, wherein the first CSI feedback model is a model desired by the first device for performing CSI feedback.

49. A second device, comprising:

a second communication module, configured to receive second complex signals from a first device for carrying first information; and

a second processing module, configured to perform second processing on the second complex signals, to obtain a second bitstream carrying the first information and/or feature information related to the second bitstream.

50. The second device of claim 49, wherein the second processing module is further configured to: perform channel decoding and descrambling on the second bitstream and/or the feature information related to the second bitstream to obtain the first information.

51. The second device of claim 49 or 50, wherein the second processing is performed by a pre-configured first reception processing model, input information of the first reception processing model comprises the second complex signals and/or third complex signals obtained by performing demapping on the second complex signals, and output information of the first reception processing model comprises the second bitstream for the first information and/or the feature information related to the second bitstream.

52. The second device of claim 51, wherein the first reception processing model is used to process the second complex signals and/or the third complex signals based on channel information.

53. The second device of any one of claims 49 to 52, wherein the second communication module is further configured to: send Channel State Information (CSI) feedback information to the first device, wherein the CSI feedback information comprises an identifier (ID) of a first reception processing model for performing the second processing and/or an ID of a first sending processing model corresponding to the first reception processing model.

54. The second device of any one of claims 49 to 52, wherein the second communication module is further configured to:

receive first indication information from the first device,
wherein the first indication information comprises an ID of a first reception processing model for performing the second processing and/or an ID of a first sending processing model corresponding to the first reception processing model, and the ID of the first reception processing model and/or the ID of the first sending processing model is determined by the first device based on CSI sent by the second device.

55. The second device of any one of claims 49 to 52, wherein

the second communication module is further configured to receive Modulation and Coding Scheme (MCS) information from the first device, wherein the MCS information corresponds to a first order, the first order is a number of information bits sent by the first device through antenna(s) on a single Resource Element (RE), and the MCS information is determined by the first device based on CSI; and
the second processing module is further configured to determine, based on the MCS information, related information of the second processing.

56. The second device of claim 55, wherein the second processing module is further configured to:
determine, based on the MCS information, an ID of a first reception processing model for performing the second processing or input information of the first reception processing model.

57. The second device of claim 55 or 56, wherein the second processing module is further configured to:
determine a Transport Block Size (TBS) based on the first order, wherein the TBS is used for performing channel decoding on the second bitstream and/or the feature information related to the second bitstream.

58. The second device of claim 57, wherein the second processing module is further configured to:
determine the TBS based on a product of the first order, a number of REs used for transmission in a current slot, and a code rate for channel decoding.

59. The second device of any one of claims 49 to 58, wherein the second communication module is further configured to:
receive first trigger information from the first device, wherein the first trigger information is used to instruct the second device to perform the second processing.

60. The second device of claim 59, wherein the first trigger information comprises at least one of:

second indication information for instructing the second device to perform the second processing;
an ID of a second reception processing model, wherein the second reception processing model is a model desired by the first device for performing the second processing;
an ID of a second sending processing model corresponding to the second reception processing model; or
an ID of a first CSI feedback model, wherein the first CSI feedback model is a model desired by the first device for performing CSI feedback.

61. The second device of claim 59 or 60, wherein the second communication module is further configured to:
send first feedback information to the first device, wherein the first feedback information comprises at least one of following:

whether the second device agrees to perform the second processing;
an ID of a third reception processing model, wherein the third reception processing model is a model desired by the second device for performing the second processing;
an ID of a third sending processing model corresponding to the third reception processing model; or
an ID of a second CSI feedback model, wherein the second CSI feedback model is a model desired by the second device for performing CSI feedback.

62. The second device of any one of claims 49 to 57, wherein the second communication module is further configured to:
send second trigger information to the first device, wherein the second trigger information is used to instruct the first device to perform the first processing corresponding to the second processing.

63. The second device of claim 62, wherein the second trigger information comprises at least one of following:

third indication information for instructing the first device to perform the first processing;

an ID of a third reception processing model, wherein the third reception processing model is a model desired by the second device for performing the second processing;

an ID of a third sending processing model corresponding to the third reception processing model; or

an ID of a second CSI feedback model, wherein the second CSI feedback model is a model desired by the second device for performing CSI feedback.

64. The second device of claim 63 or 63, wherein the second communication module is further configured to: receive second feedback information from the first device, wherein the second feedback information comprises at least one of following:

whether the first device agrees to perform the first processing;

an ID of a second reception processing model, wherein the second reception processing model is a model desired by the first device for performing the second processing;

an ID of a second sending processing model corresponding to the second reception processing model; or

an ID of a first CSI feedback model, wherein the first CSI feedback model is a model desired by the first device for performing CSI feedback.

65. A first device comprising: a transceiver, a processor and a memory, wherein the memory is configured to store a computer program, the transceiver is configured to communicate with other devices, and the processor is configured to invoke and execute the computer program stored in the memory to cause the first device to perform the method of any one of claims 1 to 16.

66. A second device comprising: a transceiver, a processor and a memory, wherein the memory is configured to store a computer program, the transceiver is configured to communicate with other devices, and the processor is configured to invoke and execute the computer program stored in the memory to cause the second device to perform the method of any one of claims 17 to 32.

67. A chip comprising: a processor for invoking and executing a computer program from a memory to cause a device on which the chip is mounted to perform the method of any one of claims 1 to 16.

68. A chip comprising: a processor for invoking and executing a computer program from a memory to cause a device on which the chip is mounted to perform the method of any one of claims 17 to 32.

69. A computer readable storage medium for storing a computer program that, when executed by a device, causes the device to perform the method of any one of claims 1 to 16.

70. A computer readable storage medium for storing a computer program that, when executed by a device, causes the device to perform the method of any one of claims 17 to 32.

71. A computer program product comprising computer program instructions that cause a computer to perform the method of any one of claims 1 to 16.

72. A computer program product comprising computer program instructions that cause a computer to perform the method of any one of claims 17 to 32.

73. A computer program that causes a computer to perform the method of any one of claims 1 to 16.

74. A computer program that causes a computer to perform the method of any one of claims 17 to 32.

75. A communication system, comprising:

a first device for performing the method of any of claims 1 to 16;
a second device for performing the method of any one of claims 17 to 32.

**FIG. 1**

Codewords

Layers

Antenna ports

Scrambling → Modulation

Scrambling → Modulation

Layer mapper

Precoding

RE mapper → OFDM signal generation

RE mapper → OFDM signal generation

**FIG. 2**

Transmitting end

Send a reference signal for CSI measurement

Reference signal

Receiving end

Estimate channel condition based on received reference signal

Calculate CSI feedback information (including RI, PMI, CQI) based on estimated channel information

CSI feedback information

Select MCS based on CQI, to determine modulation manner

Determine the precoding manner based on the feedback of RI and PMI

Signal transmission

**FIG. 3**

The first device performs first processing on the first bitstream carrying the first information to obtain the first complex signals carrying the first information ⎯ S410

The first device sends the first complex signals to the second device ⎯ S420

**FIG. 4**

The second device receives the second complex signals from the first device for carrying the first information ⎯ S510

The second device performs second processing on the second complex signals to obtain the second bitstream carrying the first information and/or feature information related to the second bitstream ⎯ S520

**FIG. 5**

FIG. 6

Base
station

Trigger joint
modulation
and precoding

Issue model
ID (optional)

Feedback on
whether to
perform joint
modulation
and precoding

Report model
ID (optional)

UE

**FIG. 7**

Base
station

Trigger joint
modulation
and precoding

Report model ID
(optional)

Feedback on
whether to
perform joint
modulation
and precoding

Issue model
ID (optional)

UE

**FIG. 8**

Base
station end

Select MCS
index based
on CSI

Select a model based on MCS
index or input MCS index
into the model, complete joint
modulation and precoding,
and indicate MCS index to
UE through DCI

Signal
transmission

CSI feedback
information

UE end

Select a model based on
MCS index specified in
DCI or input the MCS
index into the model, and
complete joint signal
detection and demodulation

**FIG. 9**

EP 4 761 198 A1

Base
station
end

Select an
appropriate model
based on the model
ID and complete
joint modulation
and precoding

Signal
transmission

CSI feedback
information
(reporting model ID)

UE
end

Complete joint
signal detection
and demodulation
by using a model
that matches the
reported model ID

**FIG. 10A**

Base
station
end — | Channel coding | — | Scrambling | — | Determine joint modulation and precoding methods based on CSI | — | Joint modulation and precoding | — | RE resource mapping | — | Insert CSI-RS | — | OFDM signal generation | —

Signal
transmission

UE
end

**FIG. 10B**

Base
station
end — Channel coding — Scrambling — Determine joint modulation and precoding methods based on CSI — Joint modulation and precoding — RE resource mapping — Insert CSI-RS — OFDM signal generation —

Signal
transmission

UE
end

**FIG. 11**

EP 4 761 198 A1

Base
station end

Signal
transmission

UE end — | OFDM channel demapping | — | Channel estimation and CSI calculation | — | Joint signal detection and demodulation | — | RE demapping | — | Descrambling | — | Channel decoding | —

**FIG. 12**

First device 1300

First processing module 1310

First communication module 1320

**FIG. 13**

Second device 1400

Second communication module 1410

Second processing module 1420

**FIG. 14**

Communication device
1500

Memory
1520

Processor
1510

Transceiver
1530

**FIG. 15**

Chip 1600

Input interface 1630

Processor 1610

Memory 1620

Output interface 1640

**FIG. 16**

Communication system 1700

First device — 1300

Second device — 1400

**FIG. 17**

## INTERNATIONAL SEARCH REPORT

| International application No. |
|---|
| **PCT/CN2023/111992** |

**A.    CLASSIFICATION OF SUBJECT MATTER**

H04L27/34(2006.01)i

According to International Patent Classification (IPC) or to both national classification and IPC

**B.    FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNABS: CNTXT; CNKI; ENTXTC; VEN; IEEE; 3GPP: 比特流, 调制, 编码, 复数, 解调, 解码, 指示, 调制与编码策略, bit stream, modulate, encode, complex number, demodulate, decode, indicate, MCS

**C.    DOCUMENTS CONSIDERED TO BE RELEVANT**

| Category* | Citation of document, with indication, where appropriate, of the relevant passages | Relevant to claim No. |
|---|---|---|
| X | CN 113746775 A (HUAWEI TECHNOLOGIES CO., LTD.) 03 December 2021 (2021-12-03) description, paragraphs [0005]-[0066], [0111]-[0262], and [0304]-[0312] | 1-75 |
| X | WO 2023124997 A1 (HUAWEI TECHNOLOGIES CO., LTD.) 06 July 2023 (2023-07-06) description, paragraphs [0087]-[0435] and [0523]-[0556] | 1-75 |
| X | CN 114258650 A (SAMSUNG ELECTRONICS CO., LTD.) 29 March 2022 (2022-03-29) description, paragraphs [0069]-[0070] | 1-75 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **23 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/111992**

| Patent document cited in search report | | | Publication date (day/month/year) | Patent family member(s) | | | Publication date (day/month/year) |
|---|---|---|---|---|---|---|---|
| CN | 113746775 | A | 03 December 2021 | WO | 2021244403 | A1 | 09 December 2021 |
| | | | | EP | 4152712 | A1 | 22 March 2023 |
| | | | | US | 2023103770 | A1 | 06 April 2023 |
| WO | 2023124997 | A1 | 06 July 2023 | | None | | |
| CN | 114258650 | A | 29 March 2022 | WO | 2021034058 | A1 | 25 February 2021 |
| | | | | EP | 4014397 | A1 | 22 June 2022 |
| | | | | US | 2021050956 | A1 | 18 February 2021 |
| | | | | KR | 20210020628 | A | 24 February 2021 |

Form PCT/ISA/210 (patent family annex) (July 2022)